# EUROPÄISCHE PATENTSCHRIFT

(11) **EP 2 640 537 B1**
(45) Veröffentlichungstag und Bekanntmachung des Hinweises auf die Patenterteilung: **02.08.2017**
(21) Anmeldenummer: 11831824.5
(22) Anmeldetag: 16.11.2011
(51) Int. Cl.: B22D 17/02, B22D 17/20, B22D 17/22, B29C 33/00, B29C 45/27

(54) **DRUCKGUSSDÜSE UND DRUCKGUSSVERFAHREN**
DIECASTING DIE AND DIECASTING METHOD
BUSE DE COULÉE SOUS PRESSION ET PROCÉDÉ DE COULÉE SOUS PRESSION

(30) Priorität: 17.11.2010 DE 102010060640; 05.05.2011 DE 102011050149
(43) Veröffentlichungstag der Anmeldung: 25.09.2013
(73) Patentinhaber: Ferrofacta GmbH, 35108 Allendorf (DE)
(72) Erfinder: MÜLLER, Walter, 35088 Battenberg/E. (DE)
(74) Vertreter: Maikowski & Ninnemann Patentanwälte Partnerschaft mbB
(86) Internationale Anmeldenummer: PCT/DE2011/075274
(87) Internationale Veröffentlichungsnummer: WO 2012/076008

(56) Entgegenhaltungen:
- WO-A1-03/018234
- DE-A1- 4 404 862
- DE-A1- 10 359 692
- DE-A1- 19 543 805
- US-A- 4 370 115

## Beschreibung

Die vorliegende Erfindung betrifft eine Druckgussdüse und ein Druckgussverfahren für angusslosen Druckguss, insbesondere in einem Druckgussheißkammersystem, wobei die Druckgussdüse zur Ausbildung eines einen Schmelzefluss unterbrechenden, vollständig wiederaufschmelzbaren Pfropfens aus erstarrter Schmelze in einem Angussbereich vorgesehen ist.

Der Anguss, der bei herkömmlichen Druckgussverfahren in den Kanälen zwischen der Druckgussdüse und der Gießform erstarrt, bringt zusätzlichen Materialaufwand mit sich, der in der Regel zwischen 40 % und 100 % des Gewichts des Gussteils beträgt. Selbst wenn der Anguss zum Materialrecycling wieder eingeschmolzen wird, ist dies mit Energie- und Qualitätsverlusten verbunden. Der angusslose Druckguss vermeidet diese Nachteile.

Für den angusslosen Druckguss ist es erforderlich, die Schmelze im flüssigen Zustand entweder für jeden Guss aus dem Schmelztiegel an die Form heran- und danach wieder zurückzuführen oder in diesem Zustand am Einguss der Form zu halten. Letzteres geschieht beim Warmkanalverfahren, wo alle Kanäle bis zur Form so beheizt sind, dass die Schmelze flüssig bleibt und zugleich am Rückfluss zum Schmelztiegel gehindert wird.

Der Rückfluss in den Schmelztiegel kann durch Ventile verhindert werden, aber auch durch einen Pfropfen erstarrter Schmelze, der die Angussöffnung in der Druckgussdüse verschließt.

Vorrichtungen und Verfahren für angusslosen Druck unter Ausbildung eines einen Angussbereich gegen Schmelzefluss verschließenden, wiederaufschmelzbaren Pfropfen aus erstarrter Schmelze sind im Stand der Technik bekannt, siehe z.B. DE 195 43 805 A. Derartige Vorrichtungen und Verfahren werden insbesondere für den Druckguss von Nichteisenmetallen und insbesondere Kunststoffen beschrieben.

Die Druckschrift DE 19846710 B4, die sich mit dem Spritzgießen von Kunststoff befasst, sieht einen Wärmeentzug an der Düsenöffnung vor, was zum Erstarren der Schmelze in diesem Bereich führt. Damit wird der Rückfluss der Schmelze in die Kanäle und in den Schmelztiegel verhindert.

Eine gezielte Beeinflussung der erneuten Verflüssigung der erstarrten Schmelze ist jedoch nicht vorgesehen. Stattdessen kann der entstandene Pfropfen erst mit der Entformung des Gussteils entfernt werden.

Weiterhin beschreibt die EP 1201335 A1 ein Warmkanalverfahren für Nichteisenmetalle mit einem beheizten Angussmundstück, dem Angussbereich, bei dem der Rückfluss der Schmelze in die Kanäle und den Schmelztiegel durch einen Pfropfen im ungeheizten Düsenmundstück verhindert wird. Das Angussmundstück ist von außen beheizt. Der Pfropfen löst sich von der Wand des Angussmundstücks wird durch die beim nächsten Gießvorgang einschießende Schmelze aus dem Düsenmundstück ausgestoßen.

Damit der feste Pfropfen dabei nicht sofort in die Gießform geschleudert wird, ist ein Aufnahmeraum für den Pfropfen notwendig. Hieraus resultiert aber eine Behinderung der Strömung der Schmelze beim Einschießen. Da diese mit einer Geschwindigkeit von 50 - 100 m/s in die Form eintritt, könnte die Form zudem durch einen losen und mit der Schmelze mitgerissenen Pfropfen beschädigt werden. Ein kontrolliertes, vollständiges Aufschmelzen des Pfropfens ist nicht möglich. Selbst wenn dieses versucht würde, wären sehr lange, die Produktivität beeinträchtigende Taktzeiten erforderlich.

Die Druckschrift DE 4319306 A1 hat ein Verfahren zum angusslosen Spritzgießen für synthetische Harze zum Gegenstand. Dazu weist eine Spritzgussvorrichtung einen Eingusskanal mit Spitzenheizung auf. Wenngleich die Einspritzdüse für eine gezielte Beeinflussung der Schmelze eine zweiteilige Heizung - für den Düsenkörper und die Düsenspitze getrennt - aufweist, erfolgt auch hier eine Beheizung durch die Wand der Einspritzdüse hindurch, woraus eine entsprechende Verzögerung resultiert, bis die durch die Heizung eingetragene Wärme an die Schmelze gelangt. Zudem ist ein zusätzlicher Ventilstift für die Steuerung des Schmelzezuflusses erforderlich, da hier kein Verschlusspfropfen ausgebildet wird. Außerdem ist dieses System ausschließlich für den Spritzguss von Kunststoffen geeignet, da der Einbau einer Heizung in die Düsenspitze deren Druckfestigkeit in der Weise mindert, dass sie die im Metalldruckguss auftretenden Drücke nicht ertragen könnte, oder aber der Aufbau der Düsenspitze derart massiv wäre, dass die thermische Trägheit des Materials zwischen Heizung und Schmelze zu sehr langen Taktzeiten führen würde.

Gegenstand der Druckschrift DE 3809643 ist das angusslose Spritzgießen von Kunstharzen. Hierbei erfolgt zum Verschluss der Angussöffnung dessen Abkühlung, wobei das nachfolgende Öffnen durch Wiederaufheizen erfolgt. Dazu ist jedoch eine aufwendig hergestellte Angussöffnung erforderlich, die sowohl eine Heizung des in der Düse befindlichen Harzes, als auch eine Wärmeübertragung an ein Kühlmedium ermöglichen muss.

Die Druckschrift DE 3531127 A1 hat ein Element zum Gegenstand, das ein Verschließen und Öffnen der Angussöffnung einer Spritzgießdüse für Harz mittels thermischer Wirkungen ermöglicht. Dabei erfolgt an der Spitze des Elements durch Kühlen ein Verfestigen der Schmelze, so dass diese die Angussöffnung verschließt. Beim Erhitzen kommt es zum Schmelzen durch ein in dem Element angeordnetes Heizelement. Die Kühlung ist dadurch gewährleistet, dass nach dem Abschalten der Heizung keine weitere Wärme an die Spitze des Elements abgegeben und die dort vorhandene Wärme von der Spitze abgeleitet wird. Somit wird auf eine zusätzliche Kühlung verzichtet.

Jedoch ist das Element zusätzlich in der Angussöffnung anzuordnen. Weiterhin ist die Heizung im Inneren des Elements angeordnet, woraus eine Zeitverzögerung durch die Wärmeleitung von innen nach außen resultiert und die Schnelligkeit des Spritzgießverfahrens beeinträchtigt. Der hohle Innenraum zur Aufnahme der Heizung beeinträchtigt die Druckfestigkeit, was insbesondere bei Druckguss von Metallschmelzen problematisch ist.

Auch die Druckschrift DE 2542875 befasst sich mit einem erstarrten Pfropfen innerhalb der Düsenspitze beim Spritzguss von Thermoplast mit dem Ziel, diese zu verschließen. Das Aufschmelzen erfolgt durch nachströmende Wärme aus dem Düsenkörper, jedoch sind auch eine zusätzliche Heizung und eine zusätzliche Kühlung vorgesehen.

Auch in diesem Fall ist eine Heizung von außerhalb der Düse vorgesehen, was die Reaktionszeit des Verfahrens verlängert und wodurch insbesondere die Verflüssigung bzw. Verfestigung der Schmelze in der Düse - trotz vorgesehener Temperaturerfassung - nur unzureichend kontrollierbar ist.

Zwar ist nach dem Stand der Technik für Spritz- und Druckgusstechnik unterschiedlicher Materialien - und insbesondere auch für das angusslose Spritzgießen - das Verschließen einer Düse durch einen Pfropfen erstarrter Schmelze bekannt. Weiterhin ist bekannt, dass dieser Pfropfen durch Erwärmung aufgeschmolzen werden kann. Dem Stand der Technik ist aber auch gemein, dass alle Versuche, im Interesse der Schnelligkeit und Steuerbarkeit des Gießprozesses den Temperatureinfluss möglichst nahe an die Schmelze heranzubringen, sich darin erschöpft haben, dass die indirekte Heizung zwar nahe an die Schmelze herangebracht wurde, aber immer noch durch eine Wand von dieser getrennt ist. Ein schneller Gießvorgang und eine hohe Wärmeleistung am Angusspunkt sind mit den bekannten Vorrichtungen nicht zu erreichen, insbesondere auch deshalb, weil mit steigendem Druck - im Interesse kurzer Taktzeiten - die Materialstärke der Druckgussdüse erhöht werden muss, was die Trägheit weiter erhöht.

Aufgabe der vorliegenden Erfindung ist es daher eine Druckgussdüse und ein Druckgussverfahren nach dem Oberbegriff der Erfindung anzubieten, die für unterschiedliche Schmelzen geeignet sind, bei dem eine Heizung unmittelbar, mit hoher Leistung und weitgehend verzögerungsfrei auf die Schmelze wirkt, eine Kühlung nicht erforderlich ist und das Spritzgießverfahren mit hoher maschineller Arbeitsgeschwindigkeit sowie unter gut kontrollier- und reproduzierbaren Angussbedingungen durchzuführen ist.

Die Aufgabe wird gelöst durch eine Druckgussdüse für angusslosen Druckguss, insbesondere in einem Druckgussheißkanalsystem, wobei die Druckgussdüse zur Ausbildung eines einen Schmelzefluss unterbrechenden, vollständig wiederaufschmelzbaren Pfropfens aus erstarrter Schmelze in einem Angussbereich vorgesehen ist, wobei der Angussbereich eine Schmelzwärme erzeugende, in unmittelbaremKontakt mit der Schmelze befindliche Widerstandsdirektheizung umfasst.

Die erfindungsgemäße Druckgussdüse ist insbesondere für den Druckguss von metallischen Schmelzen im Warmkanal und im Kaltkanal geeignet. Es kann also sowohl mit gefülltem als auch mit ungefülltem Kanal gegossen werden. Die Vorzüge des Gießens mit gefülltem, permanent beheizten Kanal liegen aber in einer deutlich höheren Taktgeschwindigkeit und damit verbesserten Produktivität, da die Schmelze wohl bei jedem Takt aus dem Schmelztiegel herangeführt werden muss. Zudem resultiert aus dem permanent gefüllten Kanal eine höhere und konstante Gussteilqualität, da Unsauberkeiten durch Oxidschichten vermieden werden. Um das Zurückfließen der Schmelze aus dem Kanal in den Schmelztiegel zu verhindern, muss die Druckgussdüse verschlossen und damit ein Nachströmen von Luft verhindert werden. In der Folge bleiben die Druckgussdüse und die Kanäle bis zum Schmelztiegel mit Schmelze gefüllt.

In der Druckgussdüse sind elektrisch leitende und auch nicht leitende Materialien als Schmelzens verarbeitbar. Durch den weitgehend verzögerungsfreien Eintrag einer hohen Menge von Wärmeenergie in die Schmelze im Angussbereich ist dieser im Vorfeld des Einspritzens der Schmelze vollständig mit flüssiger Schmelze gefüllt. Der weitgehend verzögerungsfreie Eintrag von Wärmeenergie wird durch den unmittelbaren Kontakt zwischen Schmelze und Widerstandsdirektheizung ermöglicht. Damit wird gesichert, das ausschließlich flüssige Schmelze in die Gießform eingespritzt wird und kein fester, nur angeschmolzener Pfropfen zusammen mit der Schmelze in die Gießform hineingeschleudert wird. Dieser würde dort, bedingt durch die hohen Eintrittsgeschwindigkeiten der Schmelze von 50 - 100 m/s, Beschädigungen an der Oberfläche der Form oder Inhomogenitäten im Gussteil hervorrufen.

Die Widerstandsdirektheizung ermöglicht darüber hinaus einen entsprechend robusten Aufbau der Druckgussdüse, insbesondere im Angussbereich, so dass diese auch den im Druckguss metallischer Schmelzen auftretenden hohen Drücken widersteht.

Bei der erfindungsgemäßen Druckgussdüse wird die Wärme zielgerichtet und energiesparend auf einen eng begrenzten Bereich angewendet.

Da sich die erfindungsgemäße Druckgussdüse unmittelbar am Angussbereich der Gießform befindet, auch wenn es sich um eine Mehrfachform handelt, werden Angüsse am Gussteil vollständig vermieden. Die daraus resultierenden Vorteile bestehen in der Vermeidung von Abfällen und damit das energieaufwändige Rück schmelzen und Regenerieren des Abfalls. Weiterhin fällt kein Oxidschaum an, Transportkosten werden gespart und auf die Nacharbeit zum Entfernen der Angüsse vom Gussteil kann verzichtet werden.

Besonders vorteilhaft ist es, wenn die Widerstandsdirektheizung als direkte Kurzschlussheizung ausgeführt ist, wobei der elektrische Stromkreis im Angussbereich eine elektrisch leitende Schmelze umfasst. Die direkte Kurzschlussheizung ist grundsätzlich bei allen elektrisch leitenden Schmelzen anwendbar. Dabei wird jeder der beiden elektrischen Pole bis an den Angussbereich der Druckgussdüse getrennt herangeführt. Im Angussbereich werden beide Pole durch die Schmelze verbunden. Damit besteht die Widerstandsheizung in der Schmelze selbst, die Wärme der Widerstandsheizung fällt unmittelbar und ohne das Erfordernis weiterer Heizelemente unmittelbar in der Schmelze ab. Hierdurch wird die Trägheit der Heizung und damit die Taktzeit des Druckgussheißkanalsystems auf ein Minimum reduziert.

Es hat sich als besonders günstig erwiesen, wenn bei der Druckgussdüse eine elektrisch leitende äußere Kanalstrecke, besonders bevorzugt die Düsenwand, eine erste Polarität und eine elektrisch leitende Schmelze eine zweite Polarität aufweisen. Dabei muss nur einer der beiden Pole bis an den Angussbereich herangeführt werden, der andere Pol ist die Schmelze selbst.

Besonders vorteilhaft ist es, wenn die Düsenwand aus Titan besteht. Trotz guter elektrischer Leitfähigkeit hat Titan eine relativ geringe thermische Leitfähigkeit, etwa nur ein Drittel im Vergleich zu Stahl, so dass es einen Isolationseffekt aufweist. Dadurch muss die Düse in geringerem Umfang nachgeheizt werden, um die Schmelze bei der erforderlichen Temperatur zu halten.

Weiterhin vorteilhaft ist eine Druckgussdüse, die eine elektrisch leitende, eine zweite Polarität aufweisende und gegen die Schmelze elektrisch isolierte Elektrode, einen Leiter, bevorzugt einen Metalleiter, umfasst, deren zum Angussbereich hin weisendes Ende einen von Isolierung freien, mit der Schmelze in elektrisch leitendem Kontakt befindlichen Bereich aufweist. Dabei muss auf die Polarität der Schmelze kein besonderes Augenmerk gerichtet werden, da beide Pole getrennt bis zum Angussbereich geführt und erst dort, im Bereich der Widerstandsdirektheizung, mit der Schmelze in Berührung kommen.

Besondere Vorteile resultieren, wenn der Angussbereich als isolierender, verschleißfester Einsatz ausgeführt ist. Thermische Isolationseigenschaften verhindern den Wärmeabfluss aus der Schmelze in die Form, so dass diese ihre Temperatur ohne oder durch Nachheizen in geringem Umfang behält. Bei elektrisch isolierenden Eigenschaften des Einsatzes entfällt das Erfordernis, die Form anderweitig gegen die Düse zu isolieren. Mit einem separaten Einsatz kann hochwertiges, verschleißfestes Material in geringer Menge eingesetzt werden, so dass dennoch eine kostengünstige Lösung resultiert. Zudem kann ein verschlissener Einsatz leicht ausgetauscht werden, ohne die gesamte Druckgussdüse auswechseln zu müssen, was ebenfalls zu einer Kostenersparnis führt.

Hierbei ist der isolierende, verschleißfeste Einsatz besonders bevorzugt aus Keramik ausgeführt. Dieses Material ist besonders verschleißfest gegenüber der aggressiven Zinkschmelze, die neben abrasiven Effekten durch ihre hohe Temperatur die Festigkeit einer Stahldüse verringert und zudem zur Legierung mit dieser neigt.

Es hat sich weiterhin als günstig erweisen, wenn der Schmelzekanal als Karbonrohr ausgeführt ist. Dieses weist ebenso eine hohe Resistenz gegenüber der Schmelze auf wie die vorgenannte Keramik. Zudem besteht die Möglichkeit, das Karbonrohr elektrisch zu beheizen und damit die Temperatur der Schmelze auf dem erforderlichen Wert zu halten.

Zur Erhöhung der Flexibilität in der Anwendung der erfindungsgemäßen Druckgussdüse ist es vorteilhaft, wenn die Widerstandsdirektheizung als indirekte Kurzschlussheizung ausgeführt ist, wobei der elektrische Stromkreis im Angussbereich zwischen der Düsenwand, die bevorzugt eine äußere Kanalstrecke bildet, und einem Schmelzekanal, der eine innere Kanalstrecke bildet, einen elektrisch leitendes Kurzschlusselement aufweist. Damit können elektrisch leitende Schmelzen, Schmelzen elektrisch leitender Legierungen mit unterschiedlichen Schmelzpunkten der Legierungspartner und elektrisch nicht leitende Schmelzen vergossen werden. In jedem Fall wird die Wärme, die die Widerstandsdirektheizung erzeugt, in dem Kurzschlusselement frei. Da dieses in unmittelbarem Kontakt mit der Schmelze steht, ist auch hier ein weitgehend verzögerungsfreies Aufschmelzen möglich. Insbesondere günstig ist hierbei, dass es auf die Leitfähigkeit und die elektrischen Eigenschaften der Schmelze nicht ankommt, sondern dass das Kurzschlusselement selbst konstante elektrische Eigenschaften aufweist, die unabhängig von der Schmelze reproduzierbare Bedingungen hervorrufen.

Es hat sich weiterhin als günstig erwiesen, wenn die äußere Kanalstrecke mit einer ersten Polarität und die innere Kanalstrecke über die elektrisch leitende Schmelze mit einer zweiten Polarität elektrisch kontaktierbar ist. Die äußere Kanalstrecke und die innere Kanalstrecke sind damit in entgegengesetzter Polarität elektrisch kontaktierbar, wobei auf einen gesonderten Leiter bis zum Angussbereich verzichtet werden kann, wenn dieser mit Elektroenergie zu versorgen ist.

Besondere Vorzüge resultieren aus einer Widerstandsdirektheizung, die als in der Leistung steuer- und/oder regelbare Niederspannungs-Hochstrom-Widerstandsdirektheizung ausgeführt ist. Hierdurch wird es möglich, eine absolut genau gesteuerte Leistung, beispielsweise durch den Einsatz einer Phasenanschnittssteuerung, eine Widerstandssteuerung oder auf andere Weise, einzustellen. Damit ist der Verschleiß im Angussbereich reduzierbar. Besonders vorteilhaft ist es in diesem Zusammenhang, wenn mit einer Hochstrom-Gleichspannung gearbeitet wird. So kann der elektrolytische Einfluss der Schmelze auf das Düsenmundstück, den Angussbereich, minimiert werden. Bei geeigneter Auswahl der Polarität sind nachteilige Einflüsse auf das Düsenmundstück minimierbar.

Die Steuerung der Widerstandsdirektheizung umfasst sowohl ein diskretes Schalten, als auch ein Reduzieren und Verstärken der Heizleistung, ohne dass diese vollständig ab- oder zugeschaltet wird.

Die Aufgabe der Erfindung wird weiterhin gelöst durch ein Druckgussverfahren für angusslosen Druckguss, insbesondere ein Druckgussheißkanalverfahren, wobei in der Druckgussdüse nach einem der vorhergehenden Ansprüche der den Schmelzefluss unterbrechende, wiederaufschmelzbare Pfropfen aus erstarrter Schmelze ausgebildet wird, mit den folgenden Verfahrensschritten.
1. Schließen einer Gießform: Das Schließen der Gießform erfolgt im Anschluss an die Entnahme des Gussteils, das im vorausgegangenen Arbeitszyklus gefertigt wurde. Die Gießform wird dabei so fest verschlossen, dass sie dem hohen Druck der Schmelze standhält.
2. Heizen der Druckgussdüse und vollständiges Aufschmelzen des Pfropfens im Angussbereich der Druckgussdüse durch Erhöhung der Leistung der Widerstandsdirektheizung: Die Erhöhung der Leistung erfolgt aus einem Ruhestrom oder, im Sinne eines Einschaltens, aus einem vollständig unterbrochenen Stromfluss heraus. Die eingetragene Wärmeleistung ist dabei so groß, dass der Pfropfen aus erstarrter Schmelze nicht einfach nur im Randbereich anschmilzt und somit von der Wand des Angussbereich gelöst wird, sondern er schmilzt vollständig auf. Dadurch vermischt er sich mit der Schmelze, die nachfolgend in die Form gepresst wird, und hinterlässt keinerlei Spuren, beispielsweise in Form von Inhomogenitäten, im Gussteil.
3. Ausschalten der Heizung durch Verminderung der Leistung der Widerstandsdirektheizung: Das vollständige Ausschalten bzw. die deutliche Reduzierung der Wärmeleistung ist insbesondere dann wichtig, wenn es sich um ein Verfahren mit Abheben der Düse von der Gießform handelt. Bei diesem Verfahren würde es beim Aufsetzen der Düse auf die Gießform zu einem Kurzschluss kommen, der ohnehin ein weiteres Beheizen verhindern würde. Eine weitere Beheizung ist jedoch in jedem Falle, auch ohne ein Abheben der Düse, nicht mehr erforderlich, weil die im Schmelzestrom enthaltene Wärmemenge, durch die mit hoher Temperatur nachströmende Schmelze gesichert wird.
4. Einspritzen der Schmelze in die Gießform: Die Schmelze durchströmt die Düse, gelangt in die Gießform hinein, bis diese vollständig mit Schmelze ausgefüllt ist, und der Schmelzestrom zum Stehen kommt.
5. Halten des Druckes der Schmelze: Wenn keine weitere Schmelze nachströmt, wird bis zum Erstarren der Schmelze in der Gießform der Druck, mit dem die Schmelze auch beim Einströmen in die Gießform beaufschlagt war, weiter gehalten. Damit wird ein sicheres Ausfüllen aller Hohlräume in der Form gewährleistet und Lufteinschlüsse und andere Gießfehler vermieden.
6. Erstarren der Schmelze in der Gießform: In der gefüllten Gießform erstarrt die Schmelze zum Gussteil. Das Erstarren kann durch Kühlkanäle, die von einem Kühlmittel durchströmt werden, in der Form beschleunigt werden. Über das Kühlmittel wird die Wärme des Gussteils abgeführt.
7. Erstarren der Schmelze im Angussbereich der Druckgussdüse: Mit dem Erstarren der Schmelze zum Gussteil, das noch mit der Druckgussdüse in direktem Kontakt steht, wird auch die Wärme der Schmelze im Angussbereich der Druckgussdüse in das nun kühle Gussteil hin abgeleitet. Dadurch kommt es zum Erstarren der Schmelze in diesem Bereich, was zugleich zum Abdichten dieses Bereichs führt. Der Angussbereich der Druckgussdüse ist damit durch einen Pfropfen verschlossen. Die hinter den Pfropfen in der Druckgussdüse befindliche Schmelze kann weder aus dieser hinaus strömen, noch Luft in die Druckgussdüse hineinziehen und durch die Kanäle zurück in den Schmelztiegel fließen. Die Druckgussdüse bleibt somit zusammen mit den Kanälen mit flüssiger Schmelze gefüllt. In einer alternativen Ausführungsform schließt zusätzlich ein Rückschlagventil in wenigstens einem der Schmelzeverteiler und hindert zusätzlich die Schmelze am Rückfluss.
8. Öffnen der Gießform: Zur Entnahme des Gussteils ist es erforderlich, die Gießform zu öffnen. Da die Druckgussdüse durch den Schmelzepfropfen verschlossen ist, kommt es beim Öffnen der Gießform nicht zu einem Austritt von Schmelze.
9. Entformen eines Gussteils aus der Gießform: Nach dem Öffnen der Gießform kann das Gussteil entformt, also aus der Gießform entnommen werden.

Damit ermöglicht das angusslose Druckgussheißkanalsystem, das die erfindungsgemäße Druckgussdüse aufweist, gut reproduzierbare Bedingungen, woraus eine hohe gleichbleibende Gussteilqualität resultiert. Insbesondere sind auch die Wandstärken des Gussteils bei entsprechender Materialeinsparung durch diese erhöhte Qualität minimierbar.

In einer alternativen Ausgestaltung des erfindungsgemäßen Verfahrens folgt auf den Verfahrensschritt des Ausschaltens der Heizung das Aufsetzen der Druckgussdüse mit dem Angussbereich auf die Gießform und auf das Erstarren der Schmelze in der Gießform und im Angussbereich der Druckgussdüse das Abheben der Druckgussdüse von der Gießform. Damit besteht kein Erfordernis, die Düsespitze gegen die Form zu isolieren. Der Aufbau der Düse ist somit einfacher und kostengünstiger.

Besonders vorteilhaft ist es, die Polarität der Widerstandsdirektheizung in Abhängigkeit der Materialien der Druckgussdüse und der Schmelze so zu wählen, dass der elektrolytische Einfluss und der Verschleiß des Angussbereiches minimiert werden. Die Polarität wird dabei in Abhängigkeit von den zum Aufbau der Düse gewählten Materialien und dem Material der Schmelze festgelegt. Damit ist ein besonders verschleißarmer Betrieb der Druckgussdüse möglich.

Es hat sich weiterhin als günstig erwiesen, wenn die Leistung der Widerstandsdirektheizung im Angussbereich in der Weise gesteuert wird, dass der Verschleiß des Angussbereiches minimiert wird. Die Steuereinrichtung gibt dabei nur die Leistung ab, die zum Aufschmelzen des Schmelzepfropfens im Angussbereich erforderlich ist. Damit wird der Verschleiß der Druckgussdüse im Angussbereich nochmals vermindert. Die Steuerung der Heizleistung erfolgt dabei entsprechend des Materials der Schmelze sowie anderer Parameter der Druckgussdüse, beispielsweise der Angussgeometrie. Alternativ zu einer Steuerung durch feste Parameter ist vorgesehen, dass eine Regelung Messwerte von Sensoren verarbeitet und damit die Heizleistung entsprechend bestimmt. Als Sensoren sind Temperatursensoren im Bereich der Druckgussdüse, aber auch andere Sensoren, wie beispielsweise Drucksensoren im Schmelzekanal, vorgesehen.

Weitere Ausgestaltungen und Vorteile der Erfindung sind in der Beschreibung der Figuren dargestellt. Es zeigen:
Fig. 1: eine schematische Schnittdarstellung eines Druckgussheißkanalsystems mit einer Ausführungsform einer erfindungsgemäßen Druckgussdüse in Startposition;
Fig. 2: eine schematische halbseitige Schnittdarstellung einer Ausführungsform einer erfindungsgemäßen Druckgussdüse in kurzer Bauform;
Fig. 3: eine schematische halbseitige Schnittdarstellung einer Ausführungsform einer erfindungsgemäßen Druckgussdüse langer Bauform mit Heizung;
Fig. 4: eine schematische Schnittdarstellung einer Ausführungsform einer erfindungsgemäßen Druckgussdüse in kurzer Bauform, mit Verteiler und Gießform;
Fig. 5: eine schematische Schnittdarstellung eines Rückschlagventils einer Ausführungsform einer erfindungsgemäßen Druckgussdüse;
Fig. 6: eine schematische Schnittdarstellung einer Ausführungsform einer erfindungsgemäßen Druckgussdüse in langer Bauform mit Heizung;
Fig. 7: eine schematische Schnittdarstellung einer Ausführungsform einer erfindungsgemäßen Druckgussdüse in kurzer Bauform;
Fig. 8: eine schematische Schnittdarstellung einer Ausführungsform eines Details einer erfindungsgemäßen Druckgussdüse;
Fig. 9: eine schematische Schnittdarstellung einer weiteren Ausführungsform eines Details einer erfindungsgemäßen Druckgussdüse;
Fig. 10a: eine schematische Schnittdarstellung einer Ausführungsform einer erfindungsgemäßen Druckgussdüse mit einem isolierten Metallleiter;
Fig. 10b: eine schematische Schnittdarstellung einer weiteren Ausführungsform einer erfindungsgemäßen Druckgussdüse mit einem isolierten Metallleiter;
Fig. 10c: eine schematische Schnittdarstellung einer weiteren Ausführungsform einer erfindungsgemäßen Druckgussdüse mit einem isolierten Metallleiter und Punktanguss;
Fig. 11a: eine schematische Draufsicht einer Ausführungsform einer erfindungsgemäßen Druckgussdüse mit Widerstandsdirektheizelementen;
Fig. 11b: eine schematische Schnittdarstellung einer Ausführungsform einer erfindungsgemäßen Druckgussdüse mit Widerstandsdirektheizelementen;
Fig. 12a: eine schematische Schnittdarstellung einer Ausführungsform einer erfindungsgemäßen Druckgussdüse mit Widerstandsdirektheizelementen und kurzem leitendem Schmelzekanal;
Fig. 12b: eine schematische Schnittdarstellung einer Ausführungsform einer erfindungsgemäßen Druckgussdüse mit Widerstandsdirektheizelementen und langem leitendem Schmelzekanal;
Fig. 13a bis 13d: schematische Darstellungen von Angussformen einer erfindungsgemäßen Druckgussdüse;
Fig. 14: eine schematische Darstellung in Seitenansicht einer Ausführungsform eines Schmelzeverteilers als Schnittstelle für erfindungsgemäße Druckgussdüsen;
Fig. 15a: eine schematische Darstellung in Seitenansicht mit unsichtbaren Linien einer Ausführungsform eines weiteren Schmelzeverteilers als Schnittstelle für erfindungsgemäße Druckgussdüsen;
Fig. 15b: eine schematische Schnittdarstellung einer Ausführungsform eines weiteren Schmelzeverteilers als Schnittstelle für erfindungsgemäße Druckgussdüsen;
Fig. 16: eine schematische Darstellung einer Ausführungsform eines weiteren Schmelzeverteilers für Metallschmelzen hoher Temperatur;
Fig. 17a: eine schematische Darstellung in Seitenansicht einer Ausführungsform eines Schmelzeverteilers für Metallschmelzen hoher Temperatur mit Keramikeinsätzen;
Fig. 17b: eine schematische Schnittdarstellung einer Ausführungsform eines weiteren Schmelzeverteilers für Metallschmelzen hoher Temperatur mit Keramikeinsätzen;
Fig. 18: eine schematische Schnittdarstellung einer Ausführungsform eines weiteren Schmelzeverteilers für Metallschmelzen hoher Temperatur mit keramikumkleideten Schmelzekanälen; und
Fig. 19a bis 19f: schematische Darstellungen von Ausführungsformen von Elementen keramikumkleideter Schmelzekanäle.

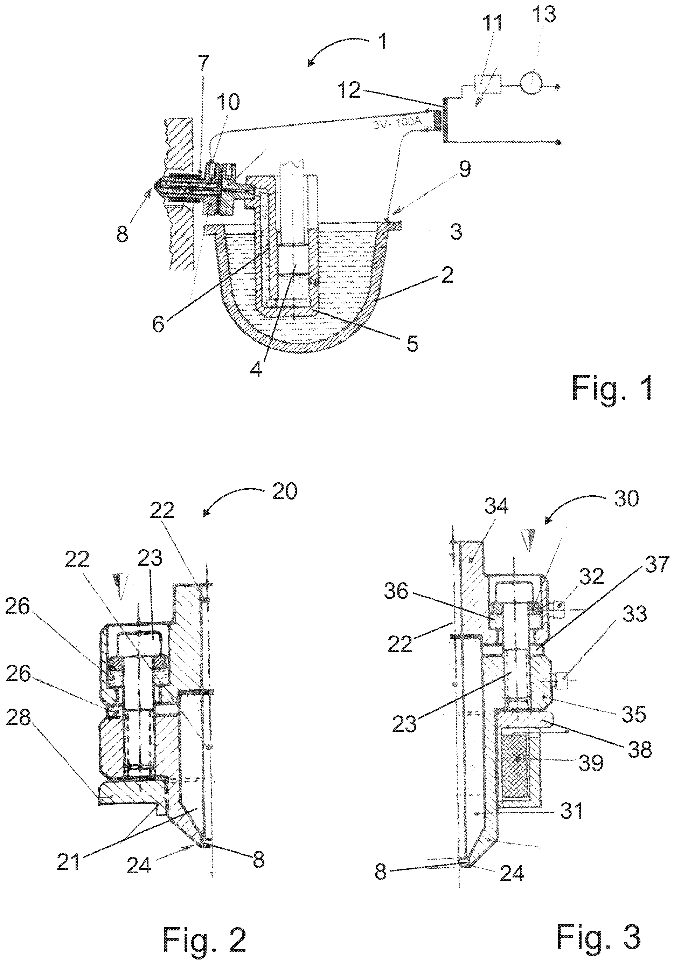

Fig. 1 zeigt eine schematische Schnittdarstellung eines Druckgussheißkanalsystems 1 mit einer Ausführungsform einer erfindungsgemäßen Druckgussdüse 7 in Startposition für einen neuen Gießvorgang, beispielsweise nach dem Schließen der hier nicht dargestellten Gießform. Das Druckgussheißkanalsystem 1 umfasst einen Schmelztiegel 2, der eine hier nicht dargestellte Heizung aufweist, mit deren Hilfe die Schmelze 3 in flüssigem Aggregatzustand gehalten wird. In die Schmelze 3 ragt ein Zylinder 5 hinein, der sich mit Schmelze 3 füllt. In dem Zylinder 5 ist ein Kolben 4 in der Weise beweglich angeordnet, dass er die im Zylinder 5 befindliche Schmelze 3 in einem schnellen Hub und in sehr kurzer Zeit, bevorzugt zwischen 10 und 100 ms, durch einen Kanal 6 pressen kann.

Der Kanal 6 mündet in eine Druckgussdüse 7, die an ihrem vom Kanal 6 abgewandten Ende einen Angussbereich 8 aufweist.

Der Schmelztiegel 2 weist einen elektrischen Anschluss 9 für einen ersten Pol und die Druckgussdüse 7 einen elektrischen Anschluss 10 für einen zweiten Pol auf. Beide Anschlüsse 9, 10 sind über elektrische Leitungen sekundärseitig mit einem Transformator 12 verbunden, der primärseitig mit einer bekannten Stromquelle, einer Steuereinrichtung 11 für die Stromstärke und einer Steuereinrichtung 13 für den Einschaltzeitpunkt verbunden ist. In einer alternativen Ausführungsform ist vorgesehen, dass die Steuereinrichtung 11 und die Steuereinrichtung 13 in der Weise zusammengefasst sind, dass die Stromstärke dem Erfordernis der betreffenden Stärke im Verfahrensablauf entspricht, ohne dass ein diskretes Schalten erfolgt. Besonders bevorzugt wird bei dieser Ausführungsform eine Phasenabschnittssteuerung, beispielsweise unter Einsatz eines Thyristors vor, angewandt.

Der Transformator 12 liefert eine hohe Stromstärke bei niedriger Spannung. Die Stromstärke liegt zwischen 20 und 500 A, bevorzugt bei 100 A. Die sekundärseitige, stabile Spannung am Transformator 12 beträgt 0,5 - 42 V, bevorzugt 3 V. Mit der niedrigen Spannung ist eine sehr einfache, weder besondere Isolations-, noch Sicherheitsbedingungen erfordernde Stromführung möglich. In der bevorzugten Ausführungsform wird eine Leistung von 300 W auf den Angussbereich 8 zur Erwärmung der dort befindlichen Schmelze appliziert. Alternativ ist eine variable Spannung, insbesondere auch unter Berücksichtigung der elektrolytischen Bedingungen am Angussbereich, vorgesehen.

Fig. 2 zeigt eine schematische halbseitige Schnittdarstellung einer Ausführungsform einer erfindungsgemäßen Druckgussdüse 20 in kurzer Bauform. Die kurzer Bauform ermöglicht einen Verzicht auf eine zusätzliche Heizung der Druckgussdüse 20, da über den hier nicht dargestellten Verteiler und die Schmelze 22 ausreichend Wärme in den Düsenkörper eingetragen wird. Die Schmelze 22 wird über einen zentralen Kanal, aus dem Verteiler kommend, in den zur Düsenspitze 24 weisenden Bereich eingeführt. Im Bereich der Düsenspitze 24 durchströmt die Schmelze 22 einen Isolatorkörper 21, der die Schmelze 22 gegen den Teil der Druckgussdüse 20, der die entgegengesetzte Polarität bezüglich der Schmelze 22 aufweist, isoliert.

Die dargestellte Ausführungsform einer erfindungsgemäßen Druckgussdüse 20 ist geeignet zu einer dauerhaften Berührung mit der hier nicht dargestellten Gießform. Ein taktweises Abheben der Druckgussdüse 20 von der Gießform entfällt hierdurch. Dazu ist eine elektrische Isolation zur Gießform erforderlich, die mittels des Isolationsrings 28 erfolgt. Um die Düsenspitze 24 gegen die übrigen Teile des Druckgussheißkanalsystems zu isolieren, sind weitere Isolatoren 26 vorgesehen. Diese isolieren den nicht der Düsenspitze 24 verbundenen Teil der Druckgussdüse 7 und die Verschraubung 23 gegen den anderen, mit dem Verteiler in Verbindung stehenden Teil der Druckgussdüse des 7. Dadurch werden beide Pole der für die Heizung erforderlichen Elektroenergie bis an den Angussbereich 8 herangeführt. Die Kurzschlussheizung wird dort wirksam.

Fig. 3 zeigt eine schematische halbseitige Schnittdarstellung einer Ausführungsform einer erfindungsgemäßen Druckgussdüse 30 langer, im Wesentlichen zweiteiliger Bauform mit Heizung. Der Aufbau der Druckgussdüse 30 entspricht in wesentlichen Elementen der der Druckgussdüse 20 und weist ein erstes Düsenelement 34 auf, dass an einem Verteiler angebracht und gegen ein zweites Düsenelement 35 durch den Isolator 37 isoliert ist. Um auch die Verschraubung 23 elektrisch zu isolieren, ist ein weiterer Isolator 36 vorgesehen. Die Druckgussdüse 30 ist ebenfalls mit einem Isolationsring 38 ausgestattet, der sie beim Aufsetzen auf die Gießform von dieser elektrisch isoliert. Damit ist ein Heizbetrieb der Druckgussdüse 30, unabhängig von der Polarität der Gießform und ohne dass die Düse im Heizbetrieb von der Gießform abheben muss, möglich.

Als Isolatoren 36, 37, 38 sind isolierende Werkstoffe, die eine ausreichende mechanische Festigkeit aufweisen, vorgesehen. Besonders bevorzugt finden keramische Werkstoffe oder in einer alternativen Ausführungsform mit einer Keramikschicht versehene metallische Werkstoffe Anwendung.

Beide Düsenelemente 34, 35 weisen Stromanschlüsse 32, 33 auf. Der erste Pol, verbunden mit dem Stromanschluss 32, bestimmt die Polarität der Schmelze, die durch den zentralen Kanal der Druckgussdüse 30 strömt. Der zweite Pol wird an den Stromanschluss 33 angeschlossen und beaufschlagt das zweite Düsenelement 35 mit dieser Polarität, die durch das zweite Düsenelement 35 hindurch bis zur Düsenspitze 24 geleitet wird. Die Isolierung zwischen der Schmelze und der Düsenspitze 24 erfolgt durch den Isolatorkörper 31, der bis kurz vor den Angussbereich 8 der Düsenspitze 24 reicht. Damit bleibt der Angussbereich 8 frei von Isolierung, die Schmelze 22 kommt mit der Düsenspitze 24 in Berührung und es fließt ein Kurzschlussstrom im Angussbereich 8. Damit erfolgt die Beheizung der Schmelze im Angussbereich 8 und ausschließlich dort.

Bedingt durch die große Länge ist bei der Druckgussdüse 30 eine zusätzliche Beheizung durch die Düsenkanalheizung 39 erforderlich. Diese sorgt für eine Aufrechterhaltung der erforderlichen Temperatur der Schmelze 22 auf dem Weg vom hier nicht dargestellten Verteiler zur Düsenspitze 24 bzw. dem Angussbereich 8.

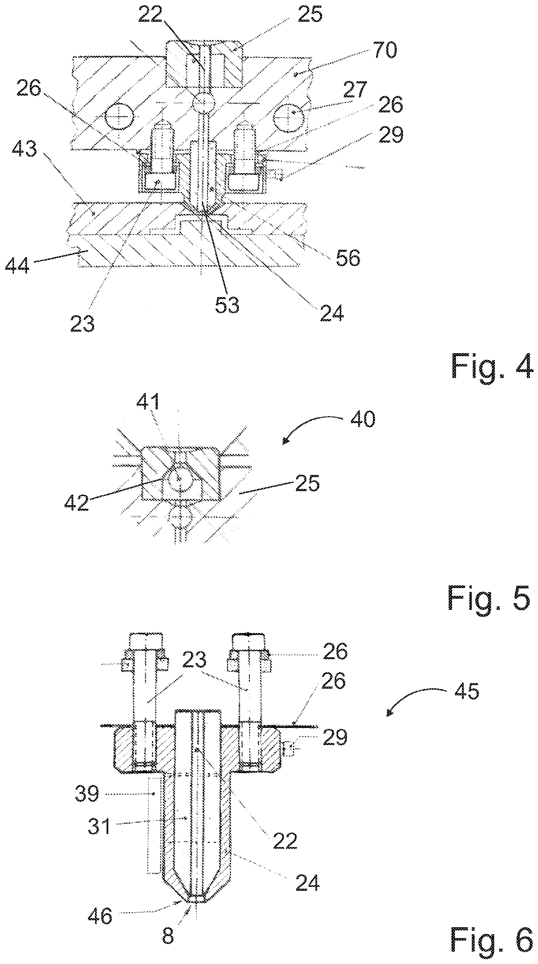

Fig. 4 zeigt eine schematische Schnittdarstellung einer Ausführungsform einer erfindungsgemäßen Druckgussdüse 56 in kurzer, im wesentlichen einteiliger Bauform, mit Verteiler 25, mit den die Druckgussdüse 56 verschraubt ist, und Gießform 43, 44, mit der die Druckgussdüse 56 in Eingriff steht. Die Gießform 43, 44 ist geschlossen, beide Formhälften liegen aufeinander und bilden einen durch die Schmelze auszufüllenden Hohlraum. Unmittelbar an den Hohlraum setzt die Druckgussdüse 56 mit der Düsenspitze 24 an. Dabei reicht die Düsenspitze 24 direkt bis an das spätere Gussteil heran, so das ein Anguss an dem späteren Gussteil vollständig vermieden wird.

Die Druckgussdüse 56 weist einen Stromanschluss 29 auf, an den eine erste Polarität herangeführt wird. Die gesamte Druckgussdüse 56 ist mit dieser Polarität beaufschlagt. Eine hier nicht dargestellte Isolierung an der Düsenspitze 24 verhindert einen elektrisch leitenden Kontakt mit dem Oberteil der Gießform 43. Damit kann die Druckgussdüse 20 mit ihrer Düsenspitze 24 dauerhaft in der entsprechenden Ausnehmung der Gießform 43, 44 eingesetzt verbleiben, ohne dass die Funktion der Widerstandsheizung beeinträchtigt wird. Die Isolierung besteht in der besonders bevorzugten Ausführungsform in einer dünn aufgesprühten und festgebrannten Keramik, die gleichzeitig eine ausreichende Wärmeleitung aufweist.

Die zweite, hier nicht dargestellte Polarität wird über die Schmelze 22 an die Düsenspitze 24, wo es zur Erwärmung der Schmelze 22 im Bereich eines hier nicht dargestellten Angussbereichs 8 durch die Widerstandsheizung kommt, herangeführt. Dabei weist auch der Verteiler 25 sowie die übrigen Elemente des hier nicht dargestellten Druckgussheißkanalsystems die zweite Polarität auf. Um die Trennung der Polaritäten bis zur Düsenspitze 24 aufrechtzuerhalten, ist die Druckgussdüse 56 durch die Isolierung 26 gegen die Verteilerbuchse 25 isoliert, und die Verschraubung 23 weist eine weitere Isolierung 26 auf.

Der Schmelzeunterverteiler 70, der in der bevorzugten Anwendung der Druckgussdüse 56 mehrere Druckgussdüsen 56 aufweist, wird durch die Heizungen 27 beheizt. Dadurch wird die Schmelze 22 im Bereich des Schmelzeunterverteilers 70 flüssig gehalten. Weiterhin wird die von den Heizungen 27 erzeugte Wärme über die Kontaktfläche zwischen Schmelzeunterverteiler 70 und Druckgussdüse 56 und die Verschraubungen 23 in die Druckgussdüse 56 übertragen. Damit erfolgt auch eine Beheizung der Schmelze 22 im Schmelzekanal 53, durch den die Schmelze 22 durch die Druckgussdüse 56 fließt.

Fig. 5 zeigt eine schematische Schnittdarstellung einer Ausführungsform eines Rückschlagventils 40 einer erfindungsgemäßen Druckgussdüse 7, 20, 30, 45, 50, 50', 56, 60, 60', 86, 86' und 86''. Das Rückschlagventils 40 ist in der bevorzugten Ausführungsform zwischen dem Schmelzeunterverteiler 70 und dem sich anschließenden, hier nicht dargestellten Kanälen zum hier ebenfalls nicht dargestellten Schmelztiegel angeordnet. Das Rückschlagventil 40 hindert die Schmelze 22 am zurückfließen in die Kanäle und in den Schmelztiegel, indem es in Fließrichtung zum Schmelztiegel hin schließt. Damit unterstützt das Rückschlagventils 40 die Funktion des Pfropfens im Angussbereich der Druckgussdüse 7, 20, 30, 45, 50, 50', 56, 60, 60', 86, 86' und 86''.

Das Rückschlagventil 40 sich ermöglicht weiterhin ein Zurücksetzen der Metallschmelze 22 im Kurzschlussbereich, dem Angussbereich 8 der Druckgussdüse 7, 20, 30, 45, 50, 50', 56, 60, 60', 86, 86' und 86'' nach der Stromunterbrechung, also nach dem Abbruch des Heizung, um etwa 2 mm. Dadurch wird die Kontaktierung der Schmelze 22 getrennt.

Das Rückschlagventil 40 weist ein Verschließelement 41 auf, das bevorzugt als Kugel ausgeführt und aus einem hitzebeständigen, besonders bevorzugt keramischen Material hergestellt ist. Das Verschließelement 41 wirkt mit einem Ventilsitz 42 zusammen.

Fig. 6 zeigt eine schematische Schnittdarstellung einer Ausführungsform einer erfindungsgemäßen Druckgussdüse 45 in langer, im Wesentlichen einteiliger Bauform mit Heizung 39. Die Druckgussdüse 45 ist zum Anbau an einen hier nicht dargestellten Schmelzeunterverteiler, ähnlich der Darstellung in Figur 4, geeignet. Zur Befestigung dienen dabei die Verschraubungen 23, die wiederum zur Isolation gegen den Schmelzeunterverteiler Isolatoren 26 aufweisen. Ein weiterer Isolator 26 dient zur Isolation der Kontaktfläche der Druckgussdüse 45 gegen die Oberfläche des Schmelzeunterverteilers.

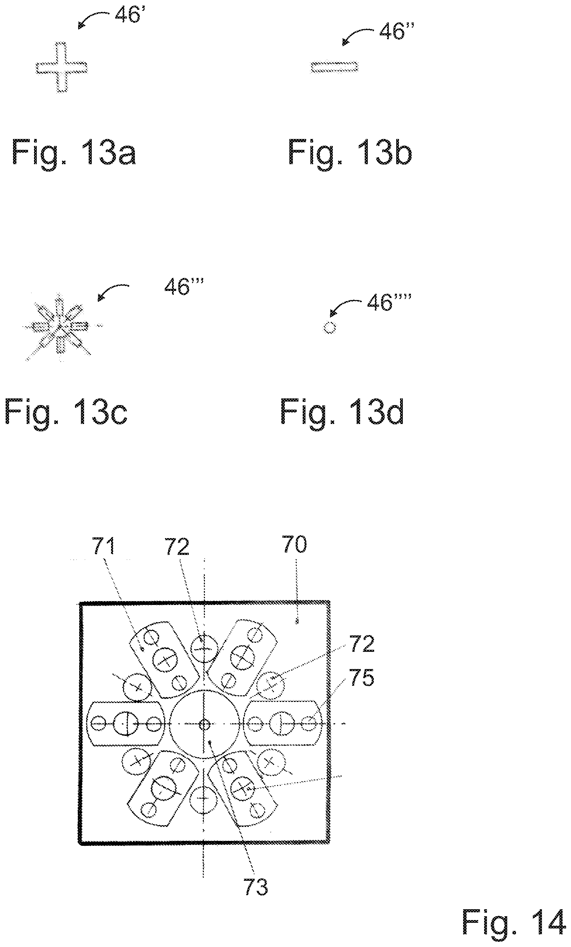

Die Düsenspitze 24 weist in ihrer Gesamtheit eine erste Polarität auf, die über den Stromanschluss 29 an diese herangeführt wird. Die zweite Polarität wird mit der Schmelze 22, die innerhalb des Isolatorkörpers 31 strömt und durch diesen gegen die Düsenspitze 24 isoliert ist, bis zum Angussbereich 8 geführt. Dort treffen beide Polaritäten aufeinander, es fließt ein Kurzschlussstrom und die Beheizung der Schmelze 22 im Angussbereich 8 ist gewährleistet. Die Geometrie des Angussbereichs 8 entspricht dabei bevorzugt einer der in den Figuren 13a bis 13d dargestellten Varianten 46 bis 46''''.

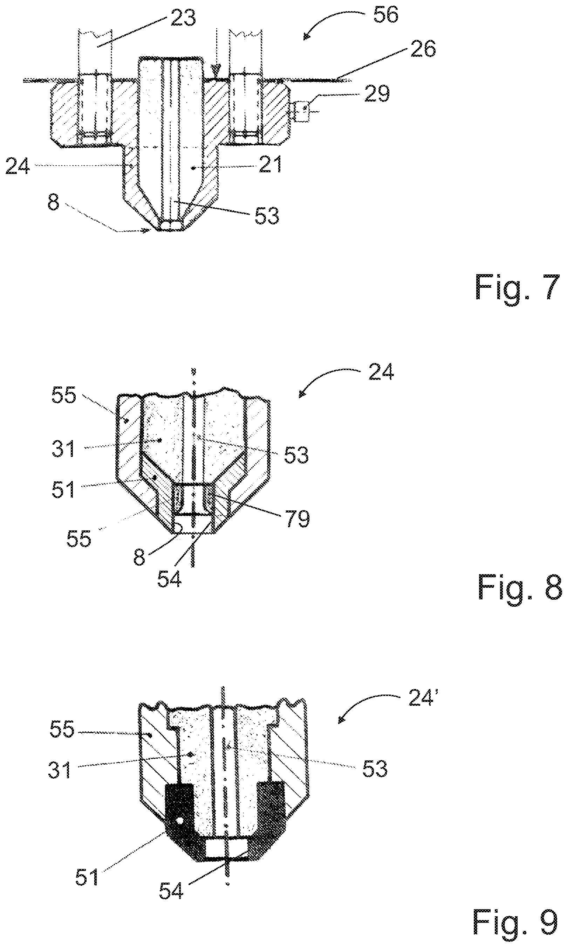

Fig. 7 zeigt eine schematische Schnittdarstellung einer Ausführungsform einer erfindungsgemäßen Druckgussdüse 56 in kurzer, im Wesentlichen einteiliger Bauform. Die Darstellung entspricht der in Figur 4, wobei die Verschraubung 23 und die Isolierung 26 hier nur angedeutet sind. Die Druckgussdüse 56 ist ohne weitere Elemente, denen sie beim erfindungsgemäßen Einsatz in Verbindung steht, dargestellt. Die Düsenspitze 24 ist der Isolatorkörper 21, der in seinem Inneren den zentralen Schmelzekanal 53 für die Schmelze aufweist, eingesetzt. Der Isolatorkörper 21 reicht in die Düsenspitze 24 bis zum Angussbereich 8 hinein. Die Düsenspitze 24 ist mit einem Stromanschluss 29 versehen und über diesen elektrisch kontaktierbar.

Fig. 8 zeigt ebenso wie die Fig. 9 eine schematische Schnittdarstellung einer Ausführungsform eines Details im Bereich der Düsenspitze 24 einer erfindungsgemäßen Druckgussdüse 7, 20, 30, 45, 56, 60 und 86. Der Isolatorkörper 31 mit dem bevorzugt zentral angeordneten, alternativ dazu jedoch auch auf andere Weise durch den Isolatorkörper 31 hindurch geführten Schmelzekanal 53 weist an seinem zum Angussbereich 8 hin weisenden Ende eine Angussbuchse 51 auf. Die Angussbuchse 51 trennt die Düsenwand 55 von der Kurzschlusskontaktstelle 54 und besteht aus einem Material, dessen Eigenschaften besondere Vorteile an der Kurzschlusskontaktstelle 54 aufweisen. Das Material weist einen geringen Verschleiß und günstige elektrolytische Eigenschaften bei der Wechselwirkung mit der Schmelze auf. Besonders bevorzugt ist der Einsatz einer hoch wolframhaltigen Stahllegierung, alternativ eines Sintermetalls.

Der Schmelzekanal 53 mündet im Bereich der Angussbuchse 51 in eine Kanalhülse 79. Diese bildet den Übergang vom Schmelzekanal 53 zum Angussbereich, wo sich die Kurzschlusskontaktstelle 54 befindet und wo sich wechselweise ein Schmelzetropfen bildet, der kurz nach seiner Bildung wieder aufgeschmolzen wird. Dieser sowohl thermische als auch elektrolytisch hoch belastete Bereich wird durch die Kanalhülse 79 vom Isolatorkörper 31 getrennt. Besonders bevorzugt ist die Kanalhülse 79 als eine Keramikhülse ausgeführt, deren Länge in unterschiedlichen Ausführungsformen unterschiedliche Werte aufweist.

In einer alternativen Ausführungsform sind mehrere Isolatorkörper 31 als Block, als geschlossene Keramikleiste mit Bohrungen für die Schmelzekanal 53, ausgeführt. In diesem Fall weisen die zur Gießform hin angeordneten Enden der Schmelzekanäle 53 jeweils eine Kanalhülse 79 auf.

Die Düsenspitze 24 nach Fig. 9 zeigt abweichend zu der Ausführungsform nach Fig. 8 einen einteiligen Einsatz, eine Angussbuchse 51. Die Angussbuchse 51 ist als ein Stück einer Düsenspitze 24 besonders bevorzugt aus Sinterhartmetall gefertigt. Die Öffnung im Bereich der Kurzschlusskontaktstelle 54 weist Querschnittsgeometrien auf, wie sie in Fig. 13a bis 13d ausgeführt sind.

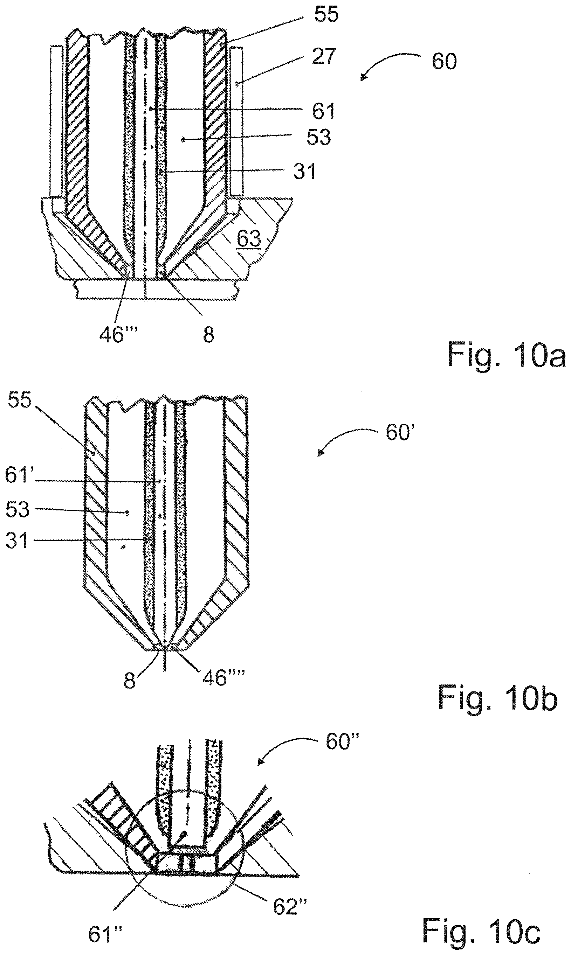

Fig. 10a zeigt eine schematische Schnittdarstellung einer Ausführungsform einer erfindungsgemäßen Druckgussdüse 60 mit einem isolierten Metallleiter, die Elektrode 61. Die Isolation der Elektrode 61 erfolgt durch den Isolatorkörper 31, der die Elektrode 61 gegen die ihn umgebende Schmelze im Schmelzekanal 53 isoliert. Am Ende des Schmelzekanals 53, im Angussbereich 8, ist der Metallleiter, die Elektrode 61, von Isolierung frei und steht in direktem Kontakt mit der Schmelze im Schmelzekanal 53. Es ist zudem vorgesehen, dass die Elektrode 61 isoliert durch den Verteiler, an dem die Druckgussdüsen 60 angeordnet sind, hindurch geführt wird, um dann außerhalb des Verteilers elektrisch kontaktiert zu werden.

In einer besonders bevorzugten Ausführungsform besteht die Elektrode 61 aus Wolfram mit einer temperaturbeständigen, bekannten elektrisch isolierenden Beschichtung als Isolatorkörper 31. Ein alternatives Material für die Elektrode 61 ist Keramik, beispielsweise Si-Karbid, die durch entsprechende Dotierung in ihrer Leitfähigkeit beeinflusst wird. Hierdurch ergibt sich ein weiterer Vorteil, da bei entsprechendem Leistungsabfall über der Elektrode durch deren elektrischen Widerstand diese sich aufheizt und somit zugleich als Kanalheizung zum Erhalt der erforderlichen Schmelzetemperatur über die gesamte Länge des Schmelzekanals 53 wirkt. Weitere geeignete Materialien für die Elektrode 61 neben Keramik und Wolfram sind vorgesehen.

Die Düsenwand 55, die in einer besonders bevorzugten Ausgestaltung der Erfindung aus einem thermisch isolierenden Material wie Titan besteht und die mit einer ersten Polarität beaufschlagt ist, steht ebenfalls mit der Schmelze im Schmelzekanal 53 in Kontakt. Somit erfolgt im Angussbereich 8 der Stromfluss der Widerstandsdirektheizung zwischen der Düsenwand 55 und der Elektrode 61 über die elektrisch leitende Schmelze im Schmelzekanal 53. Diese erwärmt sich dadurch im Angussbereich 8, der eine der Querschnittsgeometrien nach den Fig. 13a bis 13d, bevorzugt nach Fig. 13c, aufweist.

In einer alternativen Ausführungsform ist der Angussbereich 8 als isolierender, verschleißfester Einsatz, der besonders bevorzugt auch separat montier- und ersetzbar ist und/ oder aus Keramik besteht, ausgeführt. Hierdurch wird eine besonders gute Isolation zur Gießform 63 hin erreicht und ein Wärmeabfluss, der zum vorzeitigen Erstarren der Schmelze im Schmelzekanal 53 bzw. zur Vermeidung dessen eines erhöhten Wärmeeintrags bedürfte, vermieden. Ein übermäßiges Aufheizen der Gießform 63 wird hierdurch ebenfalls vermieden.

Keramik als Material für den isolierenden, verschleißfesten Einsatz widersteht auch besser der Reibung, die durch die mit hoher Geschwindigkeit einschießende Schmelze in Schmelzekanal 53 hervorgerufen wird, als Stahl, der durch den Einfluss der Schmelze in Schmelzekanal 53 zudem an Härte verliert und umso schneller verschleißt.

Zusätzlich ist vorgesehen, in einer alternativen Ausgestaltung den Schmelzekanal 53 mit einem isolierenden Material, besonders bevorzugt Titan, zu umfassen, um den Wärmeabfluss und damit das Erfordernis einer Nachheizung gering zu halten.

Eine weitere alternative Ausgestaltung der erfindungsgemäßen Druckgussdüse 60 sieht vor, den mit einer Titanschicht isolierten oder nicht isolierten Schmelzekanal 53 mit einer Karbonschicht, bevorzugt einem Karbonrohr auszukleiden, so dass die Schmelze im Inneren des Karbonrohrs strömt. Hierdurch wird vermieden, dass die Schmelze mit dem Material des Schmelzekanals 53, beispielsweise Stahl, eine Legierung bildet. Das Karbonrohr kann weiterhin mit einem Stromfluss beaufschlagt werden, so dass es zugleich zur Heizung des Schmelzekanals 53 dient.

Fig. 10b zeigt eine schematische Schnittdarstellung einer weiteren Ausführungsform einer erfindungsgemäßen Druckgussdüse 60' mit einem isolierten Metallleiter, der Elektrode 61'. Hierbei wird, ebenso wie bei Fig. 10a dargestellt, die Schmelze in Schmelzekanal 53 zwischen der Düsenwand 55 und dem Metallleiter, der Elektrode 61', der zur Schmelze in Schmelzekanal 53 hin durch den Isolatorkörper 31 isoliert ist, geführt. Das von Isolierung freie Ende des Metallleiters, der Elektrode 61', ist als Spitze ausgeführt und bildet zusammen mit dem Angussbereich 8 eine ringförmige Querschnittsgeometrie 46'''' gemäß Fig. 13d.

Fig. 10c zeigt eine schematische Schnittdarstellung einer weiteren Ausführungsform einer erfindungsgemäßen Druckgussdüse 60'' mit einem isolierten Metallleiter 62'' und Punktanguss 62''. Der Punktanguss 62'' gemäß Fig. 13d wird durch das gegenüber dem Angussbereich 8 zurückgesetzte Ende des Metallleiters, der Elektrode 61', erreicht. Dadurch wird der komplette Querschnitt des Anspritzpunktes 62'' für einen Schmelzestrom nutzbar und eine größere Menge Schmelze kann ungehindert austreten. Die Figur zeigt weiterhin einen Teil der Gießform 43, auf die die Druckgussdüse 60" aufsetzt.

Die Lösung nach den Fig. 10a bis 10c ist wegen der vereinfachten Konstruktion besonders gut in Reihenformen für Kleinteile anwendbar.

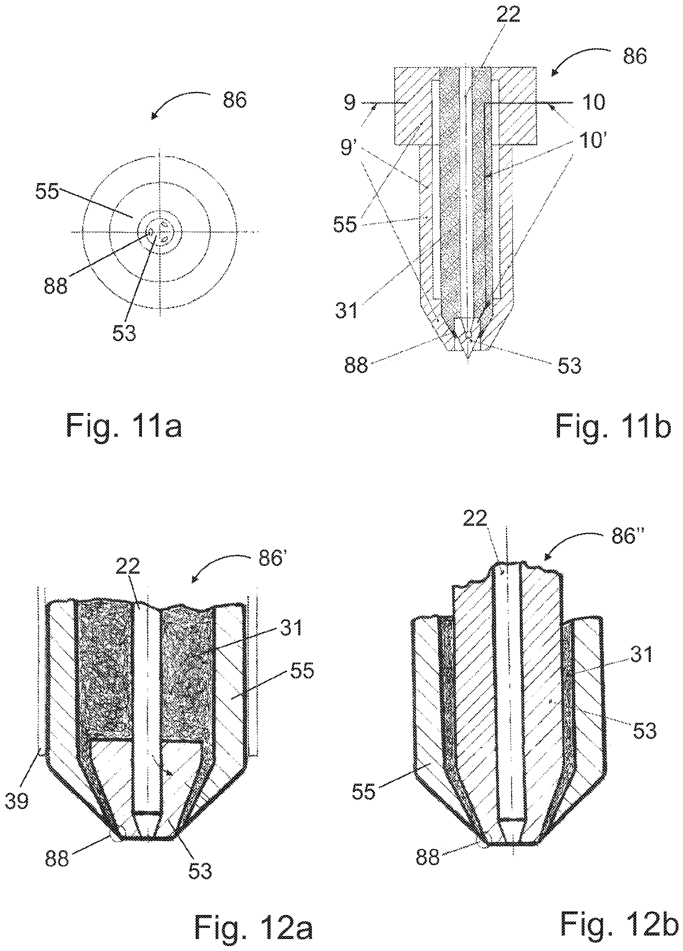

Fig. 11a zeigt eine schematische Draufsicht einer Ausführungsform einer erfindungsgemäßen Druckgussdüse 86 mit Widerstandsdirektheizelementen 88. In der dargestellten bevorzugten Ausführungsform sind drei Widerstandsdirektheizelemente 88 vorgesehen, die die Düsenwand 55 mit dem Schmelzekanal 53 verbinden. Die Düsenwand 55 und der Schmelzekanal 53 weisen bei eingeschalteter Widerstandsdirektheizung unterschiedliche Polaritäten auf, so dass es zu einem Stromfluss über die Widerstandsdirektheizelemente 88 kommt. Die Widerstandsdirektheizelemente 88 heizen sich dadurch auf, erwärmen dass sie umgebende Material, mit dem sie in unmittelbarem Kontakt stehen, und bringen es zum Schmelzen.

Fig. 11b zeigt eine schematische Schnittdarstellung einer Ausführungsform einer erfindungsgemäßen Druckgussdüse 86 mit Widerstandsdirektheizelementen 88. Die Düsenwand 55 ist mit dem Anschluss 9 für den ersten Pol ausgestattet, wobei die elektrische Leitung 9' für den ersten Pol bis zum Ende der Druckgussdüse 86, zu den Widerstandsdirektheizelementen 88 erfolgt. Der zweite Pol wird über den Anschluss 10 zugeführt und über die gesonderte Leitung 10' bis zum Schmelzekanal 53 geführt. Der Schmelzekanal 53 weist eine, in der Figur nicht erkennbare, Querschnittsgeometrie gemäß der Fig. 13a bis 13d auf, die den Austritt der Schmelze 22 kontrolliert. Auch der Schmelzekanal 53, gegen die Schmelze 22 und gegen die Düsenwand 55 durch den Isolatorkörper 31 isoliert, ist in Kontakt mit den Widerstandsdirektheizelementen 88, wodurch der Stromkreis der Widerstandsdirektheizung geschlossen wird.

Fig. 12a zeigt eine schematische Schnittdarstellung einer Ausführungsform einer erfindungsgemäßen Druckgussdüse 86' mit Widerstandsdirektheizelementen 88 und kurzem leitendem Schmelzekanal 53. Das Ende der Druckgussdüse 86', die über eine zusätzliche Düsenkanalheizung 39 verfügt, ist hier im Detail gezeigt. Die Düsenwand 55 und der Schmelzekanal 53, gegeneinander isoliert durch den Isolatorkörper 31, nähern sich im Bereich der Widerstandsdirektheizelemente 88 einander an und werden durch diese elektrisch verbunden. Werden die Widerstandsdirektheizelemente 88 mit einer Spannung beaufschlagt, fließt ein Strom, der zu ihrer Erwärmung führt und die erstarrte Schmelze 22 im Bereich des Düsenendes aufschmilzt.

Der Isolatorkörper 31 sorgt mit seinem großen Volumen nicht allein für die elektrische Isolation und die Trennung der beiden Polaritäten voneinander, sondern er bringt auch einen thermischen Isolationseffekt mit sich, so dass auf die Düsenkanalheizung 39 in einer alternativen Ausführungsform verzichtet wird.

Fig. 12b zeigt eine schematische Schnittdarstellung einer Ausführungsform einer erfindungsgemäßen Druckgussdüse 86" mit Widerstandsdirektheizelementen 88 und langem leitendem Schmelzekanal 53. die Funktion der Druckgussdüse 86" entspricht der der Druckgussdüsen 86 und 86', wobei jedoch auf eine Leitung 10' wie in Druckgussdüse 86 verzichtet werden kann, da der Schmelzekanal 53, isoliert durch den Isolatorkörper 31, auf voller Länge die zweite Polarität aufweist, während die erste Polarität über die Düsenwand 55 zum Widerstandsdirektheizelemente 88 geführt wird. Hierbei erfolgt gleichermaßen ein Aufschmelzen der Schmelze 22.

Fig. 13a bis 13d zeigen schematische Darstellungen von Angussquerschnittsgeometrien 46', 46", 46'" und 46"" von erfindungsgemäßen Druckgussdüsen 7, 20, 30, 45, 56, 60 und 86. Die Querschnittsgeometrien sind als Kreuzanguss, Schlitzanguss, Sternanguss und Punktanguss ausgeführt. Darüber hinaus ist ein nicht dargestellter, ringförmiger Angussquerschnitt vorgesehen.

Fig. 14 zeigt den Schmelzeunterverteiler 70 als Schnittstelle für erfindungsgemäße Druckgussdüsen 7, 20, 30, 45, 56, 60 und 86. Die Düsenanordnungen 71 sind dabei nach Art eines Teilkreises um einen Einspeisepunkt 73, an dem die Schmelze aus einem Schmelzehauptverteiler in den Schmelzeunterverteiler 70 eintritt, angeordnet und mittels Verschraubungen 75 mit dem Schmelzeunterverteiler 70 verschraubt. Zwischen den Düsenanordnungen 71 sind in dem Schmelzeunterverteiler 70 jeweils Heizpatronen 72 eingebracht, die eine stabile und ausreichend hohe Temperatur der Schmelze sichern.

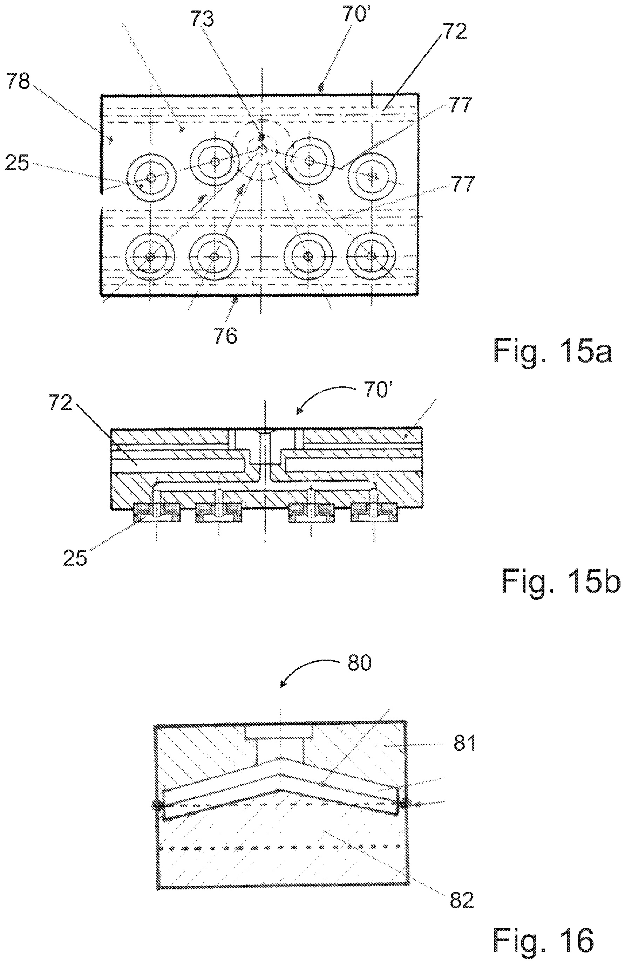

Fig. 15a zeigt eine schematische Darstellung in Seitenansicht mit unsichtbaren Linien einer Ausführungsform eines Schmelzehauptverteilers 78 als Schnittstelle für Schmelzeunterverteiler 70. In den Schmelzehauptverteiler 78 sind Verteilerbuchsen 25 eingesetzt. Diese bilden entsprechend der Darstellung in Figur 4, wo sie zur Verbindung zwischen Schmelzeunterverteiler 70 und Druckgussdüse 56 dienen, die Verbindung zwischen Schmelzehauptverteiler 78 und Schmelzeunterverteiler 70. Die Pfeile 77 geben die Fließrichtung bei einem Rückfluss der Schmelze zum Einspeisepunkt 73' an, wodurch ein Entleeren des Schmelzehauptverteiler 78 am Ende des Fertigungsprozesses gesichert wird, an. Der höchste Punkt 76 ist in der Darstellung unten angeordnet. Auch der Schmelzehauptverteiler 78 ist mit Heizpatronen 72 ausgestattet, die für eine gleichmäßige, ausreichend hohe Temperatur im Schmelzehauptverteiler 78 sorgen und die Fließfähigkeit der Schmelze garantieren.

Fig. 15b zeigt eine schematische Schnittdarstellung einer Ausführungsform eines weiteren Schmelzehauptverteilers 78 als Schnittstelle für Schmelzeunterverteiler 70. Im Schnitt sind die Schmelzekanäle, die sich vom Einspeisungspunkt 73 bis zu den Verteilerbuchsen 25 durch den Schmelzehauptverteiler 78 erstrecken, erkennbar. Weitere Hohlräume im Schmelzehauptverteiler 78 dienen der Aufnahme der Heizpatronen 72.

Das Verteilerkonzept ist vom Kunststoffheißkanal her im Grundsatz bekannt. Die vorliegende abweichende, besonders vorteilhafte Gestaltung ermöglicht ein Zurückfließen der Schmelze zum Einspeisungspunkt 73. Der Rückfluss wird in einer alternativen Ausführungsform mit einem optional eingesetzten, hier nicht dargestellten Rückschlagventil verhindert.

Fig. 16 zeigt eine schematische Darstellung einer Ausführungsform eines weiteren Schmelzeverteilers 80 für Metallschmelzen hoher Temperatur. Hier wird der Grundaufbau für einen Schmelzeverteiler 80, der vorzugsweise für Metall schmelzen hoher Temperatur, wie Aluminium und bestimmte Messinglegierungen besonders geeignet ist. Das Oberteil 81 und das Unterteil 82 verfügen über Ausnehmungen für Keramikeinsätze 85. Die Fügeflächen sind dachförmig, in einer alternativen Ausgestaltung jedoch auch gerade ausgeführt.

Besonders vorteilhaft ist es, dass nach der Bestückung von Oberteil 81 und Unterteil 82 mit Keramikeinsätzen keine besonderen Fügepassungen in für diese erforderlich sind, da die Keramik nach dem Verschweißen in einem Ultraschall-Pulver-Schlämmbad gedichtet wird. Vorteilhaft ist weiterhin, dass keine Gefahr eines elektrischen Kurzschluss besteht, der das Strompotenzial des Verteilers gleicht dem des ganzen Druckgussheißkanalsystems ist.

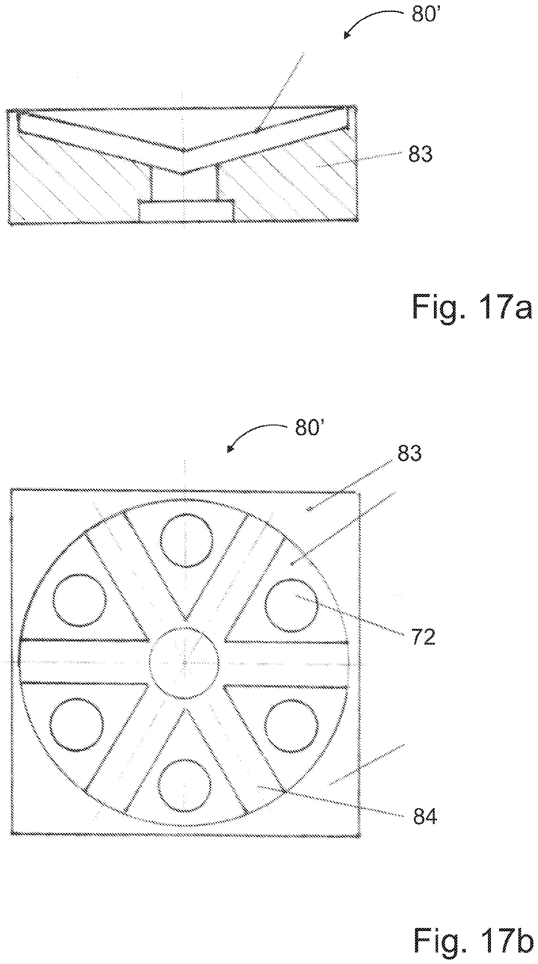

Fig. 17a zeigt eine schematische Schnittdarstellung einer Ausführungsform eines weiteren Schmelzeverteilers 80' für Metallschmelzen hoher Temperatur mit Keramikeinsätzen. Hierbei ist die Oberplatte 83 mit Keramikeinsätzen 85 ausgestattet. Das Bauvolumen der Oberplatte 83 bietet ausreichend Raum für eine starke Heizung.

Fig. 17b zeigt eine schematische Darstellung in Seitenansicht einer Ausführungsform des Schmelzeverteilers 80' aus Fig. 17a. Insgesamt sechs Ausnehmungen bilden die Kanäle 84, die wiederum mit Keramikeinsätzen 85 ausgekleidet sind. In die Oberplatte 83 sind Heizpatronen 72 eingesetzt, die die Temperatur in der Oberplatte 83 stabil halten.

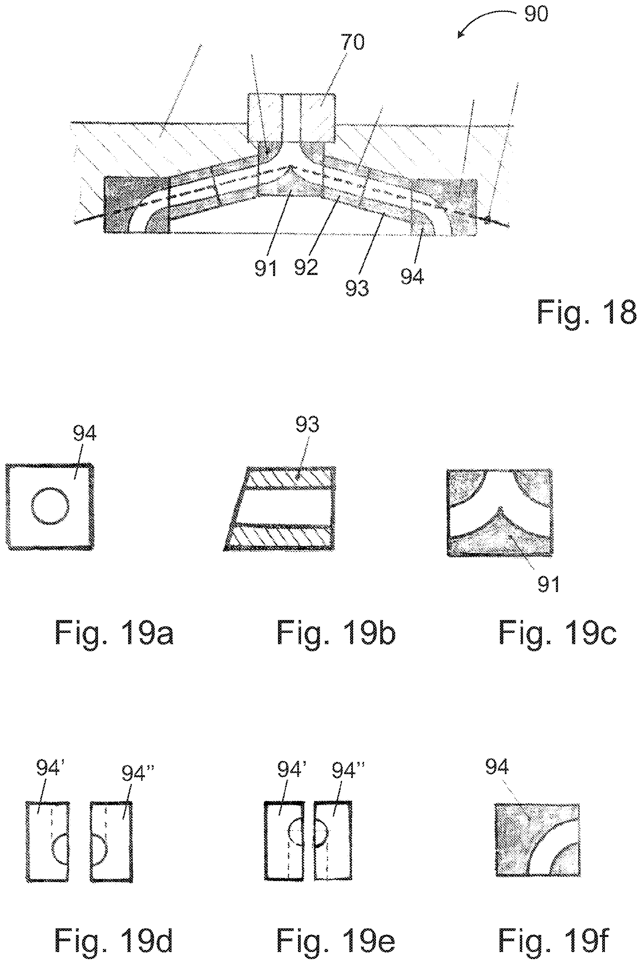

Fig. 18 zeigt eine schematische Schnittdarstellung einer Ausführungsform eines weiteren Schmelzeverteilers 90 für Metallschmelzen hoher Temperatur mit keramikumkleideten Schmelzekanälen 91, 92, 93 und 94. Besonders vorteilhaft ist es, dass die Schmelzekanäle aus einzelnen Elementen bestehen. Bei einem Verschleiß oder bei einer Beschädigung können sie auch einzeln ausgewechselt werden. Weiterhin lässt sich der Verlauf der Kanäle und deren Länge durch den Einsatz unterschiedlicher Kanalelemente variieren.

Fig. 19a bis 19f zeigen schematische Darstellungen von Ausführungsformen von Elementen keramikumkleideter Schmelzekanälen 91, 92, 93, 94. Fig. 19a zeigt dabei ein Kanalelemente 92 mit gerader Durchführung in Seitenansicht. Fig. 19b zeigt ein weiteres Kanalelement 93 mit gerader Durchführung in Schnittdarstellung. Fig. 19c zeigt das an die Verteilerbuchse 25, die in Verbindung mit dem hier nicht dargestellten Schmelzehauptverteiler steht, angrenzende und seinerseits als Verteiler wirkende Kanalelement 91. Die Figuren 19d bis 19f zeigen das bogenförmige Kanalelement 94, das ebenso wie das Kanalelement 91 zweischalig ausgeführt ist. Wegen der komplizierteren Innenstruktur liegt sich eine zweischalig Ausführung zur einfacheren Herstellung besonders vorteilhaft an, wobei zugleich auch eine leichtere Reinigung oder Wartung möglich ist.

Wird das erfindungsgemäße Verfahren ist nicht nur bei Zinklegierungen (420 °C) sondern auch für Magnesium (360 °C) anwendbar. Da die Schmelzpunkte für Magnesium und Aluminium (660 °C) relativ eng beieinander liegen, ist auch Aluminium im Druckgussheißkanalsystem 1 verarbeitbar. Weiterhin ist die Anwendung für Blei (327 °C) und Zinn (232 °C) vorgesehen. Messing und Bronze haben je nach Anteil der Legierungspartner unterschiedliche Schmelzpunkte, die jedoch bis zu 800 °C betragen können. Für die Verarbeitung von Messing ist die erfindungsgemäße Auskleidung der Kanäle 84, 91, 92, 93, 94 mit Keramik erforderlich.

Weiterhin ist es in diesem Falle vorteilhaft, die Widerstandsdirektheizung mit Widerstandsdirektheizelementen 88 zu verwenden, da hierbei unabhängig von Leitfähigkeit und Schmelzpunkten der Legierungspartner eine vorgegebene, einstellbare und reproduzierbare Temperatur auf die Schmelze 22 im Angussbereich 8 einwirkt.

### Bezugszeichenliste

- 1: Druckgussheißkanalsystem
- 2: Schmelztiegel
- 3: Schmelze
- 4: Kolben
- 5: Zylinder
- 6: Kanal
- 7: Druckgussdüse
- 8: Angussbereich
- 9: Anschluss erster Pol
- 9': Leitung erster Pol
- 10: Anschluss zweiter Pol
- 10': Leitung zweiter Pol
- 11: Steuereinrichtung Stromstärke
- 12: Transformator
- 13: Steuereinrichtung Einschaltzeitpunkt
- 20: Druckgussdüse, kurz
- 21: Isolatorkörper
- 22: Schmelze
- 23: Verschraubung
- 24: Düsenspitze
- 25: Verteilerbuchse
- 26: Isolator
- 27: Heizung
- 28: Isolationsring
- 29: Stromanschluss
- 30: Druckgussdüse, beheizt, lang
- 31: Isolatorkörper
- 32: Stromanschluss
- 33: Stromanschluss
- 34: erstes Düsenelement
- 35: zweites Düsenelement
- 36: Isolator
- 37: Isolator
- 38: Isolationsring
- 39: Düsenkanalheizung
- 40: Rückschlagventil
- 41: Verschließelement
- 42: Ventilsitz
- 43: Formoberplatte der Gießform
- 44: Formunterplatte der Gießform
- 45: Druckgussdüse, lang
- 46 - 46'''': Angussquerschnittsgeometrien
- 47: Verteilerdüse (kurz)
- 50, 50': Druckgussdüse
- 51: Angussbuchse
- 52: Isolationshülse
- 53: Schmelzekanal
- 54: Kurzschlusskontaktstelle
- 55: Düsenwand
- 56: Druckgussdüse
- 60 - 60'': Druckgussdüse
- 61, 61': Elektrode
- 62 - 62'': Anspritzpunkt (Ringanguss)
- 63: Gießform
- 70, 70': Schmelzeunterverteiler
- 71: Druckgussdüsenanordnung
- 72: Heizpatrone
- 73, 73': Einspeisungspunkt
- 74: Verteilerschnittstelle
- 75: Verschraubung
- 76: höchster Punkt
- 77: Fließrichtung
- 78: Schmelzehauptverteiler
- 79: Kanalhülse
- 80, 80': Verteiler
- 81: Oberteil
- 82: Unterteil
- 83: Oberplatte
- 84: Kanäle
- 85: Keramikeinsatz
- 86 - 86": Druckgussdüse mit Widerstandsdirektheizelementen
- 88: Widerstandsdirektheizelement
- 90: Kanäle mit Keramikauskleidung
- 91 - 94: Kanalelemente

## Patentansprüche

1. Druckgussdüse (7, 20, 30, 45, 50, 50', 60, 60', 60", 86, 86', 86") für angusslosen Druckguss metallischer Schmelzen, insbesondere in einem Druckgussheißkanalsystem (1), wobei die Druckgussdüse (7, 20, 30, 45, 50, 60, 60', 60", 86, 86', 86") zur Ausbildung eines einen Schmelzefluss unterbrechenden, vollständig wiederaufschmelzbaren Pfropfens aus erstarrter Schmelze (22) in einem Angussbereich (8) vorgesehen ist, **dadurch gekennzeichnet, dass** der Angussbereich (8) eine Schmelzwärme erzeugende, in unmittelbarem Kontakt mit der Schmelze (22) befindliche Widerstandsdirektheizung umfasst, wobei
• die Widerstandsdirektheizung als direkte Kurzschlussheizung ausgeführt ist, und
• der elektrische Stromkreis im Angussbereich (8) eine elektrisch leitende Schmelze (22) umfasst;
oder
• die Widerstandsdirektheizung wenigstens ein Widerstandsdirektheizelement (88) aufweist, wobei der elektrische Stromkreis im Angussbereich (8) zwischen der Düsenwand (55), die mit einer ersten Polarität kontaktierbar ist, und einem Schmelzekanal (53), der mit einer zweiten Polarität kontaktierbar ist, ein elektrisch leitendes Widerstandsdirektheizelement (88) aufweist.

2. Druckgussdüse (7, 20, 30, 45, 50, 50', 60, 60', 60") nach Anspruch 1 , **dadurch gekennzeichnet, dass** die Druckgussdüse (7, 20, 30, 45, 50, 50', 60, 60', 60") eine elektrisch leitende Düsenwand (55) eine erste Polarität und die elektrisch leitende Schmelze (22) eine zweite Polarität aufweisen.

3. Druckgussdüse (7, 20, 30, 45, 50, 50', 60, 60', 60") nach Anspruch 2, **dadurch gekennzeichnet, dass** die Düsenwand (55) aus Titan besteht.

4. Druckgussdüse (7, 20, 30, 45, 50, 50', 60, 60', 60") nach Anspruch 2 oder 3, **dadurch gekennzeichnet, dass** die Druckgussdüse (7, 20, 30, 45, 50, 50', 60, 60', 60") eine elektrisch leitende, eine zweite Polarität aufweisende und gegen die Schmelze (22) elektrisch isolierte Elektrode (61, 61') umfasst, deren zum Angussbereich (8) hin weisendes Ende einen von Isolierung freien, mit der Schmelze (22) in elektrisch leitendem Kontakt befindlichen Bereich aufweist.

5. Druckgussdüse (7, 20, 30, 45, 50, 50', 60, 60', 60") nach einem der Ansprüche 2 bis 4, **dadurch gekennzeichnet, dass** der Angussbereich (8) als isolierender, verschleißfester Einsatz ausgeführt ist.

6. Druckgussdüse (7, 20, 30, 45, 50, 50', 60, 60', 60") nach Anspruch 5, **dadurch gekennzeichnet, dass** der isolierende, verschleißfeste Einsatz aus Keramik ausgeführt ist.

7. Druckgussdüse (7, 20, 30, 45, 50, 50', 60, 60', 60") nach einem der Ansprüche 2 bis 6, **dadurch gekennzeichnet, dass** der Schmelzekanal (53) als Karbonrohr ausgeführt ist.

8. Druckgussdüse (7, 20, 30, 45, 50, 50', 60, 60', 60", 86, 86', 86") nach einem der vorhergehenden Ansprüche, **dadurch gekennzeichnet, dass** die Widerstandsdirektheizung als mittels Steuerungen (11, 13) in der Leistung steuer- und/oder regelbare Niederspannungs-Hochstrom-Widerstandsdirektheizung ausgeführt ist.

9. Druckgussverfahren für angusslosen Druckguss metallischer Schmelzen, insbesondere ein Druckgussheißkanalverfahren, wobei in der Druckgussdüse (7, 20, 30, 45, 50, 50', 60, 60', 60", 86, 86', 86") nach einem der vorhergehenden Ansprüche der den Fluss der Schmelze (22) unterbrechende, wiederaufschmelzbare Pfropfen aus erstarrter Schmelze (22) ausgebildet wird, **gekennzeichnet durch** die Verfahrensschritte
- Schließen einer Gießform (43, 44),
- Heizen der Druckgussdüse (7, 20, 30, 45, 50, 50', 60, 60', 60", 86, 86', 86") und vollständiges Aufschmelzen des Pfropfens im Angussbereich (8) der Druckgussdüse (7, 20, 30, 45, 50, 50', 60, 60', 60", 86, 86', 86") durch Erhöhung der Leistung der Widerstandsdirektheizung,
- Abbruch des Heizens durch Verminderung der Leistung der Widerstandsdirektheizung,
- Einspritzen der Schmelze (22) in die Gießform (43, 44),
- Halten des Druckes der Schmelze (22),
- Erstarren der Schmelze (22) in der Gießform (43, 44),
- Erstarren der Schmelze (22) im Angussbereich (8) der Druckgussdüse (7, 20, 30, 45, 50, 50', 60, 60', 60", 86, 86', 86"),
- Öffnen der Gießform (43, 44) und
- Entformen eines Gussteils aus der Gießform (43, 44).

10. Verfahren nach Anspruch 9, **dadurch gekennzeichnet, dass** auf den Verfahrensschritt des Abbruchs des Heizens das Aufsetzen der Druckgussdüse (7, 20, 30, 45, 50, 50', 60, 60', 60", 86, 86', 86") mit dem Angussbereich (8) auf die Gießform (43, 44) folgt und auf das Erstarren der Schmelze (22) in der Gießform (43, 44) und im Angussbereich (8) der Druckgussdüse (7, 20, 30, 45, 50, 50', 60, 60', 60", 86, 86', 86") das Abheben der Druckgussdüse (7, 20, 30, 45, 50, 50', 60, 60', 60", 86, 86', 86") von der Gießform (43, 44).

11. Verfahren nach Anspruch 9 oder 10, **dadurch gekennzeichnet, dass** die Polarität der Widerstandsdirektheizung in Abhängigkeit der Materialien der Druckgussdüse (7, 20, 30, 45, 50, 50', 60, 60', 60", 86, 86', 86") und der Schmelze so gewählt wird, dass der elektrolytische Einfluss und der Verschleiß des Angussbereiches (8) minimiert werden.

12. Verfahren nach einem der Ansprüche 9 bis 11, **dadurch gekennzeichnet, dass** die Leistung der Widerstandsdirektheizung im Angussbereich (8) in der Weise gesteuert wird, dass der Verschleiß des Angussbereiches (8) minimiert wird.

## Claims

1. Diecasting die (7, 20, 30, 45, 50, 50', 60, 60', 60", 86, 86', 86") for sprueless diecasting of metallic molten materials, in particular in a diecasting hot-runner system (1), wherein the diecasting die (7, 20, 30, 45, 50, 60, 60', 60", 86, 86', 86") is provided in a feeding region (8) for forming a completely remeltable plug of solidified molten material (22) interrupting a flow of the molten material, **characterized in that** the feeding region (8) comprises a direct resistance heating that generates melting heat and is in direct contact with the molten material (22), wherein
• the direct resistance heating is designed as direct short-circuit heating, and
• the electrical circuit comprises an electrically conducting molten material (22) in the feeding region (8);
or
• the direct resistance heating has at least one direct resistance heating element (88), wherein the electrical circuit has an electrically conducting direct resistance heating element (88) in the feeding region (8) between the die wall (55), which can be contacted with a first polarity, and a molten material runner (53), which can be contacted with a second polarity.

2. Diecasting die (7, 20, 30, 45, 50, 50', 60, 60', 60") according to Claim 1, **characterized in that** the diecasting die (7, 20, 30, 45, 50, 50', 60, 60', 60") an electrically conducting die wall (55) has a first polarity and the electrically conducting molten material (22) has a second polarity.

3. Diecasting die (7, 20, 30, 45, 50, 50', 60, 60', 60") according to Claim 2, **characterized in that** the die wall (55) consists of titanium.

4. Diecasting die (7, 20, 30, 45, 50, 50', 60, 60', 60") according to Claim 2 or 3, **characterized in that** the diecasting die (7, 20, 30, 45, 50, 50', 60, 60', 60") comprises an electrically conducting electrode (61, 61'), which has a second polarity and is electrically insulated with respect to the molten material (22) and the end of which that is facing the feeding region (8) has a region that is free from insulation and is in electrically conducting contact with the molten material (22).

5. Diecasting die (7, 20, 30, 45, 50, 50', 60, 60', 60") according to one of Claims 2 to 4, **characterized in that** the feeding region (8) is designed as an insulating, wear-resistant insert.

6. Diecasting die (7, 20, 30, 45, 50, 50', 60, 60', 60") according to Claim 5, **characterized in that** the insulating, wear-resistant insert is made of ceramic.

7. Diecasting die (7, 20, 30, 45, 50, 50', 60, 60', 60") according to one of Claims 2 to 6, **characterized in that** the molten material runner (53) is designed as a carbon tube.

8. Diecasting die (7, 20, 30, 45, 50, 50', 60, 60', 60", 86, 86', 86") according to one of the preceding claims, **characterized in that** the direct resistance heating is designed as a low-voltage, high-current direct resistance heating with an output that can be controlled and/or regulated by means of control devices (11, 13).

9. Diecasting method for sprueless diecasting of metallic molten materials, in particular a diecasting hot-runner method, wherein the remeltable plug of solidified molten material (22) is formed in the diecasting die (7, 20, 30, 45, 50, 50', 60, 60', 60", 86, 86', 86") according to one of the above claims interrupting the flow of the molten material (22), **characterized by** the method steps of
- closing a casting mould (43, 44),
- heating the diecasting die (7, 20, 30, 45, 50, 50', 60, 60', 60", 86, 86', 86") and completely melting the plug in the feeding region (8) of the diecasting die (7, 20, 30, 45, 50, 50', 60, 60', 60", 86, 86', 86") by increasing the output of the direct resistance heating,
- stopping the heating by decreasing the output of the direct resistance heating,
- injecting the molten material (22) into the casting mould (43, 44),
- maintaining the pressure of the molten material (22),
- solidifying the molten material (22) in the casting mould (43, 44),
- solidifying the molten material (22) in the feeding region (8) of the diecasting die (7, 20, 30, 45, 50, 50', 60, 60', 60", 86, 86', 86"),
- opening the casting mould (43, 44) and
- removing a cast part from the casting mould (43, 44).

10. Method according to Claim 9, **characterized in that** the method step of stopping the heating is followed by placing the diecasting die (7, 20, 30, 45, 50, 50', 60, 60', 60", 86, 86', 86") with the feeding region (8) onto the casting mould (43, 44) and the solidifying of the molten material (22) in the casting mould (43, 44) and in the feeding region (8) of the diecasting die (7, 20, 30, 45, 50, 50', 60, 60', 60", 86, 86', 86") is followed by lifting off the diecasting die (7, 20, 30, 45, 50, 50', 60, 60', 60", 86, 86', 86") from the casting mould (43, 44).

11. Method according to Claim 9 or 10, **characterized in that** the polarity of the direct resistance heating is chosen dependent on the materials of the diecasting die (7, 20, 30, 45, 50, 50', 60, 60', 60", 86, 86', 86") and the molten material such that the electrolytic influence and the wear of the feeding region (8) are minimized.

12. Method according to one of Claims 9 to 11, **characterized in that** the output of the direct resistance heating in the feeding region (8) is controlled in such a way that the wear of the feeding region (8) is minimized.

## Revendications

1. Buse de coulée sous pression (7, 20, 30, 45, 50, 50', 60, 60', 60", 86, 86', 86") pour la coulée sous pression de matières en fusion métalliques réalisée sans canal de carotte, en particulier dans un système de coulée sous pression à canaux chauds (1), selon laquelle la buse de coulée sous pression (7, 20, 30, 45, 50, 60, 60', 60", 86, 86', 86") est prévue en vue de la formation d'un bouchon dans une zone de culot d'injection (8), qui est constitué de matière en fusion (22) solidifiée, qui peut être refondu en intégralité et qui interrompt un flux de matière en fusion, **caractérisée en ce que** la zone de culot d'injection (8) comprend un chauffage direct par résistance qui se trouve en contact direct avec la matière en fusion (22) et qui génère une chaleur de fusion, selon laquelle :
• le chauffage direct par résistance se présente sous la forme d'un chauffage direct par court-circuit ; et
• le circuit de courant électrique qui se trouve dans la zone de culot d'injection (8) comprend une matière en fusion (22) qui est électriquement conductrice ;
ou
• le chauffage direct par résistance présente au moins un élément de chauffage direct par résistance (88), selon laquelle le circuit de courant électrique qui se trouve dans la zone de culot d'injection (8) présente un élément de chauffage direct par résistance (88), lequel est électriquement conducteur, situé entre la paroi de la buse (55), laquelle peut être mise en contact avec une première polarité, et un canal de matière en fusion (53), lequel peut être mis en contact avec une deuxième polarité.

2. Buse de coulée sous pression (7, 20, 30, 45, 50, 50', 60, 60', 60") selon la revendication 1, **caractérisée en ce que** la buse de coulée sous pression (7, 20, 30, 45, 50, 50', 60, 60', 60") une paroi de buse (55) électriquement conductrice présente une première polarité ainsi que la matière en fusion (22) électriquement conductrice présente une deuxième polarité.

3. Buse de coulée sous pression (7, 20, 30, 45, 50, 50', 60, 60', 60") selon la revendication 2, **caractérisée en ce que** la paroi de la buse (55) est constituée de titane.

4. Buse de coulée sous pression (7, 20, 30, 45, 50, 50', 60, 60', 60") selon la revendication 2 ou 3, **caractérisée en ce que** la buse de coulée sous pression (7, 20, 30, 45, 50, 50', 60, 60', 60") comprend une électrode (61, 61') électriquement conductrice qui présente une deuxième polarité et qui est électriquement isolée contre la matière en fusion (22), l'extrémité de ladite électrode, laquelle est tournée en direction de la zone de culot d'injection (8), présente une zone qui se trouve en contact électriquement conducteur avec la matière en fusion (22) et qui est dépourvue d'isolation.

5. Buse de coulée sous pression (7, 20, 30, 45, 50, 50', 60, 60', 60") selon l'une des revendications 2 à 4, **caractérisée en ce que** la zone de culot d'injection (8) se présente sous la forme d'un insert isolant et résistant à l'usure.

6. Buse de coulée sous pression (7, 20, 30, 45, 50, 50', 60, 60', 60") selon la revendication 5, **caractérisée en ce que** l'insert isolant et résistant à l'usure est réalisé en céramique.

7. Buse de coulée sous pression (7, 20, 30, 45, 50, 50', 60, 60', 60") selon l'une des revendications 2 à 6, **caractérisée en ce que** le canal de la matière en fusion (53) se présente sous la forme d'un tube en carbone.

8. Buse de coulée sous pression (7, 20, 30, 45, 50, 50', 60, 60', 60", 86, 86', 86") selon l'une des revendications précédentes, **caractérisée en ce que** le chauffage direct par résistance se présente sous la forme d'un chauffage direct par résistance, de type basse tension et à forte intensité de courant, dont la puissance peut être commandée et/ou réglée au moyen de commandes (11, 13).

9. Procédé de coulée sous pression pour la coulée sous pression de matières en fusion métalliques réalisée sans canal de carotte, en particulier un procédé de coulée sous pression à canaux chauds, selon lequel le bouchon pouvant être refondu et interrompant le flux de la matière en fusion (22) est conçu à partir de la matière en fusion (22) solidifiée, dans la buse de coulée sous pression (7, 20, 30, 45, 50, 50', 60, 60', 60", 86, 86', 86"), selon l'une des revendications précédentes, lequel procédé de coulée sous pression est **caractérisé par** les phases de procédé suivantes :
- la fermeture d'un moule de coulée (43, 44) ;
- le chauffage de la buse de coulée sous pression (7, 20, 30, 45, 50, 50', 60, 60', 60", 86, 86', 86") et la fusion intégrale du bouchon dans la zone de culot d'injection (8) de la buse de coulée sous pression (7, 20, 30, 45, 50, 50', 60, 60', 60", 86, 86', 86") en augmentant la puissance du chauffage direct par résistance ;
- l'arrêt du chauffage en réduisant la puissance du chauffage direct par résistance ;
- l'injection de la matière en fusion (22) dans le moule de coulée (43, 44) ;
- le maintien de la pression de la matière en fusion (22) ;
- la solidification de la matière en fusion (22) dans le moule de coulée (43, 44) ;
- la solidification de la matière en fusion (22) dans la zone de culot d'injection (8) de la buse de coulée sous pression (7, 20, 30, 45, 50, 50', 60, 60', 60", 86, 86', 86") ;
- l'ouverture du moule de coulée (43, 44) ; et
- le démoulage d'une pièce coulée en dehors du moule de coulée (43, 44).

10. Procédé selon la revendication 9, **caractérisé en ce que** la mise en place de la buse de coulée sous pression (7, 20, 30, 45, 50, 50', 60, 60', 60", 86, 86', 86") avec la zone de culot d'injection (8) sur le moule de coulée (43, 44) se déroule après la phase de procédé de l'arrêt du chauffage et le soulèvement de la buse de coulée sous pression (7, 20, 30, 45, 50, 50', 60, 60', 60", 86, 86', 86") du moule de coulée (43, 44) se déroule après la phase de procédé de solidification de la matière en fusion (22) dans le moule de coulée (43, 44) et dans la zone de culot d'injection (8) de la buse de coulée sous pression (7, 20, 30, 45, 50, 50', 60, 60', 60", 86, 86', 86").

11. Procédé selon la revendication 9 ou 10, **caractérisé en ce que** la polarité du chauffage direct par résistance est sélectionnée en fonction des matériaux de la buse de coulée sous pression (7, 20, 30, 45, 50, 50', 60, 60', 60", 86, 86', 86") et de la matière en fusion, de telle sorte que l'effet électrolytique et l'usure de la zone de culot d'injection (8) sont réduits au minimum.

12. Procédé selon l'une des revendications 9 à 11, **caractérisé en ce que** la puissance du chauffage direct par résistance dans la zone de culot d'injection (8) est commandée de telle sorte que l'usure de la zone de culot d'injection (8) est réduite au minimum.
